(19) Europäisches Patentamt
European Patent Office
Office européen des brevets

(11) **EP 4 347 302 B1**

(12) **EUROPEAN PATENT SPECIFICATION**

(45) Date of publication and mention
of the grant of the patent:
**16.07.2025   Bulletin 2025/29**

(21) Application number: **21730854.3**

(22) Date of filing: **01.06.2021**

(51) International Patent Classification (IPC):
**B60L 3/10** *(2006.01)*        **B60L 15/20** *(2006.01)*

(52) Cooperative Patent Classification (CPC):
**B60L 15/20; B60L 3/102;** B60L 2200/28;
B60L 2200/36; B60L 2220/42; Y02T 10/72

(86) International application number:
**PCT/EP2021/064654**

(87) International publication number:
**WO 2022/253411 (08.12.2022 Gazette 2022/49)**

(54) **ENERGY EFFICIENT PROPULSION BASED ON WHEEL SLIP BALANCED DRIVE**

ENERGIEEFFIZIENTER ANTRIEB AUF BASIS EINES RADSCHLUPFAUSGEGLICHENEN ANTRIEBS

PROPULSION ÉCOÉNERGÉTIQUE BASÉE SUR UN ENTRAÎNEMENT ÉQUILIBRÉ PAR GLISSEMENT DE ROUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.04.2024   Bulletin 2024/15**

(73) Proprietor: **VOLVO TRUCK CORPORATION**
**405 08 Göteborg (SE)**

(72) Inventors:
• **LAINE, Leo**
**414 84 Göteborg (SE)**

• **RYDSTRÖM, Mats**
**427 39 Billdal (SE)**

(74) Representative: **Ström & Gulliksson AB**
**P.O. Box 4188**
**203 13 Malmö (SE)**

(56) References cited:
EP-A1- 3 708 407        FR-A3- 3 014 776
US-A1- 2013 211 678     US-A1- 2016 009 197
US-B2- 8 707 756

**Description**

TECHNICAL FIELD

The present disclosure relates to methods and control units for ensuring safe and energy efficient vehicle motion management of a heavy-duty vehicle. The methods are particularly suitable for use with articulated vehicles, such as trucks and semi-trailers comprising a plurality of vehicle units. The invention can, however, also be applied in other types of heavy-duty vehicles, e.g., in construction equipment and in mining vehicles. The invention can also be applied with advantage in self-powered towed vehicle units, such as electrified trailer vehicle units and dolly vehicle units comprising more than one driven axle.

BACKGROUND

Heavy-duty vehicles, such as trucks and semi-trailer vehicles, are designed to carry heavy loads. The heavily laden vehicles must be able to start from standstill also in uphill conditions, accelerate on various types of road surfaces with different friction coefficients, maintain stable cruising speeds, and also decelerate in a reliable manner. At the same time, energy efficiency is an important factor to consider in all operating scenarios, since it directly impacts the cost of completing a given transportation mission.

Electrically powered heavy-duty vehicle units such as tractors, electrified trailers and self-powered dolly vehicle units are being developed. Energy efficiency is of particular importance in these vehicle units, since energy efficiency has a significant impact on the achievable vehicle range for a given energy storage capacity. Thus, a lot of work has gone into designing energy efficient drive arrangements for electrically powered vehicles.

However, many of the developed drive arrangements are based on advanced optimization methods associated with high computational complexity, which are also difficult to formally verify in terms of robustness. These algorithms may not be feasible to execute on the smaller control units found in, e.g., electrified trailers and self-powered dolly vehicle units.

US2010222953 discloses a method for distributing torque over a plurality of electrical machines/axles to optimize joint propulsion system efficiency for a given vehicle state. The joint propulsion system efficiency is here formulated as function of requested torque, wheel slip and vehicle velocity.

US2016009197 also discloses a drive system for an electric vehicle.

Despite the work done to-date, there is a need for further improvements in drive arrangements in order to optimize the full potential of electrically powered vehicle units.

Another issue related to electrically powered heavy-duty vehicles is the requirement of endurance braking capability. All heavy-duty vehicles must be able to provide braking torque also during extended periods of down-hill driving. Friction brakes may risk onset of brake fading during prolonged periods of constant use and must therefore be complemented by some form of auxiliary brake system. Electrically powered heavy-duty vehicle units may use the electric machines for regenerative braking, but this will generate electrical energy which must be either stored or dissipated. This may become a problem if the energy storage system is at full charge, and brake resistors arranged to dissipate excess energy have reached high temperatures.

Thus, there is also a need to improve the endurance braking capability of electric machine arrangements.

SUMMARY

It is an object of the present disclosure to provide techniques which alleviate or overcome at least some of the above-mentioned problems. It is a particular desire to provide simplified control mechanisms for energy efficient electrical drive arrangements. This object is at least in part obtained by a vehicle control unit arranged to control motion of a heavy-duty vehicle which comprises at least first and second electric machine (EM) arrangements, where the first EM arrangement has different efficiency characteristics compared to the second EM arrangement. The vehicle control unit is arranged to control the first and the second EM arrangement by transmitting wheel slip requests to respective EM control units, and to obtain a desired total longitudinal force to be jointly generated by the first and second EM arrangements. The control unit is also arranged to determine a desired first wheel slip corresponding to a first longitudinal force generated by the first EM arrangement, and a desired second wheel slip corresponding to a second longitudinal force generated by the second EM arrangement, where the sum of the first longitudinal force and the second longitudinal force is matched to the desired total longitudinal force which may be a propulsion force for accelerating the vehicle or a braking force for decelerating the vehicle. The control unit is furthermore arranged to balance a magnitude of the first wheel slip relative to a magnitude of the second wheel slip in dependence of the respective efficiency characteristics of the first and the second EM arrangements.

This way overall propulsion efficiency can be increased, since each electric machine can be operated closer to its highest efficiency operating point in a given operating scenario. It is proposed herein to vary the slip requests sent to the different drive axles on the vehicle in dependence of drive axle efficiency characteristics, instead of varying torque requests as proposed in, e.g., US2010222953. For instance, if the vehicle is operating at low velocity, a higher slip request value will be sent to an axle optimized for low speeds compared to the slip request sent to another drive axle optimized for higher speeds. The advantage compared to torque based wheel force control being that the vehicle control unit will be able to control EM actuators at higher bandwidth, thereby maintaining the efficiency balance more accurately compared to a control system based on torque requests sent to the different drive axle controllers. Also, as will be discussed in more detail below, the wheel slip balancing algorithms proposed herein can be implemented with reasonable computational complexity, which is an advantage. This advantage becomes particularly pronounced in case the wheel slip balancing techniques are implemented on a vehicle unit lacking powerful processing circuitry, such as an electrified trailer vehicle unit or a self-powered dolly vehicle unit.

The techniques disclosed herein are also applicable to regenerative braking, where instead low EM efficiency may be desired in order to limit output power during extended periods of regenerative braking in case energy storage is nearing full capacity and energy dissipating arrangements such as brake resistors are reaching dangerously high temperatures. Thus, a means for limiting regenerated energy during braking is also provided by the herein disclosed methods, by minimizing energy efficiency of the electrical machines. In other words, by application of the herein described techniques, EM temperature increase during regenerative braking can be controlled in a robust and efficient manner.

It is appreciated that the herein disclosed techniques are applicable for balancing wheel slip over two or more EM arrangements, which EM arrangements may comprise separate wheel modules and/or drive axles, optionally driven via differential arrangements.

According to aspects, the first EM arrangement (EM1) has a different efficiency characteristic as function of vehicle speed compared to the second EM arrangement (EM2). Thus, the wheel slip requests sent to EM1 will be balanced with the wheel slip requests sent to EM2 in dependence of vehicle speed. For instance, as the vehicle is accelerating from stand-still, the drive torque will be gradually shifted from an EM that is efficient at low vehicle speed to one that is more efficient at higher vehicle speeds. This is a computationally efficient method for balancing wheel slip over more than one EM arrangement. Also, EM1 may have a different efficiency characteristic as function of applied torque or wheel force compared to EM2. In this case the wheel slip requests will be balanced to account for the difference in efficiencies in torque. Advantageously, the different EMs have varying efficiency characteristics over an efficiency map in two dimensions, where the first dimension represents torque and the second dimension represents axle speed or vehicle speed.

According to aspects, EM1 comprises one or more EMs of a different EM design and/or comprises a different gear ratio compared to the second EM arrangement EM2. This means that the two EMs will have different efficiency characteristics. For instance, EM1 may be a startability EM arrangement configured for efficiency at lower vehicle speeds, and EM2 may be a cruise-mode EM arrangement configured for efficiency at higher vehicle speeds. The two EMs may also be associated with different efficiencies when it comes to regenerative braking. It is appreciated that efficiency during regenerative braking may be advantageously be maximized in case energy storage is to be replenished, while it may also be desired to minimize overall EM efficiency during regenerative braking if the energy storage is full or cannot accept the regenerated energy from braking for some other reason. Thus, wheel slip balancing may be performed in order to maximize EM arrangement overall efficiency on the vehicle, or to minimize the overall EM arrangement efficiency, or anywhere there in-between.

According to some aspects, the control unit is arranged to balance the magnitude of the first wheel slip relative to the magnitude of the second wheel slip based on a relative gradient of the efficiency characteristics of the respective EM arrangements with respect to a control parameter. This gradient descent-based method can be implemented with low complexity and will automatically adjust the wheel slip balance to the current operating conditions of the vehicle, which is an advantage. For instance, the control unit may increase the first wheel slip in case the gradient of the efficiency characteristics of the first EM arrangement is larger than the gradient of the efficiency characteristics of the second EM arrangement at a current state of the vehicle, and to decrease the first wheel slip in case the gradient of the efficiency characteristics of the first EM arrangement is smaller than the gradient of the efficiency characteristics of the second EM arrangement at the current state of the vehicle.

According to some other aspects, the control unit may also be arranged to balance the magnitude of the first wheel slip relative to the magnitude of the second wheel slip based on a relative power consumption of the first and the second EM arrangements in comparison to a magnitude relationship between the first longitudinal force and the second longitudinal force. By balancing actual power consumptions, the dependency on accurate models for the different EM arrangements is reduced. A power consumption can be easily measured without relying on, e.g., pre-determined models of efficiency. This means that a more robust control method is provided compared to methods which solely rely on modelling efficiency in dependence of one or more parameters. For instance, the control unit may be configured to increase the first wheel slip in case a ratio between the power consumption of the first EM arrangement and the power consumption of the second EM arrangement is smaller than a corresponding ratio between the first longitudinal force and the second longitudinal force, and to decrease the first wheel slip in case the ratio between the power consumption of the first EM arrangement and the power consumption of the second EM arrangement is larger than the corresponding ratio between the first longitudinal force and the second longitudinal force.

According to aspects, the control unit is arranged to balance the magnitude of the first wheel slip relative to the magnitude of the second wheel slip based on a pre-determined balancing function parameterized by vehicle speed. This is a rather low complex implementation of the techniques disclosed herein. By using a pre-determined mapping between vehicle speed and wheel slip balance, only very little processing is required to perform the actual balancing operation. Thus, this version of the proposed technique is suitable for implementation in vehicle units lacking more powerful computational power.

According to aspects, the control unit is arranged to balance the magnitude of the first wheel slip relative to the magnitude of the second wheel slip based on a pre-determined balancing function parameterized by the total longitudinal force. Thus, different wheel slip balances will be configured in dependence of the requested force, be it propulsion or braking force. Notably, the dependence on vehicle speed may be kept, such that the mapping function is parameterized by both speed and requested total wheel force, i.e., a two-dimensional function. The pre-determined functions may advantageously be realized as look-up tables which may be pre-configured. A slightly more advanced version of this would be to adapt the function in real time as the vehicle is operated in different scenarios.

According to aspects, the transmitted wheel slip request comprises a target longitudinal wheel slip given by

$$\lambda_x = \frac{R\omega_x - v_x}{max(|R\omega|, |v_x|)}$$

where R is an effective wheel radius in meters, $\omega_x$ is the angular velocity of the wheel, and $v_x$ is the longitudinal speed of the wheel over ground. Direct control of wheel end modules based on wheel slip requests have been found to give advantages over the more traditional torque-based control. This is primarily due to that the wheel end modules may operate with lower latency to control applied torque against a target wheel slip, compared to receiving requests for torque from a central controller where the control loop is often associated with higher latency. The transmitted wheel slip request may also comprise a target angular velocity of the wheel, determined by the control unit in relation to a longitudinal speed $v_x$ of the wheel over ground to obtain a target longitudinal wheel slip $\lambda_x$.

According to aspects, the control unit is arranged to balance the magnitude of the first wheel slip relative to the magnitude of the second wheel slip based on an estimated resulting tyre wear. This way the overall lifetime of the tyres on the vehicle can be extended, since tyre wear can be controlled. For instance, tyre wear can be balanced in order for the tyres of a vehicle to be worn equally fast. The tyre wear adaptation may advantageously be based on a model of tyre wear, which can be pre-configured in dependence of, e.g., wheel slip.

According to aspects, the control unit is arranged to balance the magnitude of the first wheel slip relative to the magnitude of the second wheel slip based on respective normal loads on axles associated with EM1 and EM2. This operation may result in increased traction.

There is also disclosed herein methods, computer programs, computer readable media, computer program products, and vehicles associated with the above discussed advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

BRIEF DESCRIPTION OF THE DRAWINGS

With reference to the appended drawings, below follows a more detailed description of embodiments of the invention cited as examples. In the drawings:

| | |
|---|---|
| Figure 1 | schematically illustrates an example heavy-duty vehicle for cargo transport; |
| Figure 2 | is a graph showing an example of a tyre model; |
| Figure 3 | schematically illustrates a system for motion support device control; |
| Figures 4-5 | illustrate different electric machine propulsion arrangements; |
| Figure 6 | is a graph illustrating electric machine efficiency; |
| Figures 7-8 | show example articulated vehicle units with potential drive axles; |
| Figures 9A-B | are graphs illustrating wheel slip balancing over two and three drive axles; |
| Figures 10-11 | schematically illustrate an example |

wheel slip control system;

Figures 12A-B schematically illustrate other example vehicle control systems;

Figure 13 shows an example layered vehicle control system;

Figure 14 is a flow chart illustrating example methods;

Figure 15 schematically illustrates a sensor unit and/or a control unit; and

Figure 16 shows an example computer program product.

DETAILED DESCRIPTION OF EXAMPLE EMBODIMENTS OF THE INVENTION

The invention will now be described more fully hereinafter with reference to the accompanying drawings, in which certain aspects of the invention are shown. This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description.

It is to be understood that the present invention is not limited to the embodiments described herein and illustrated in the drawings; rather, the skilled person will recognize that many changes and modifications may be made within the scope of the appended claims.

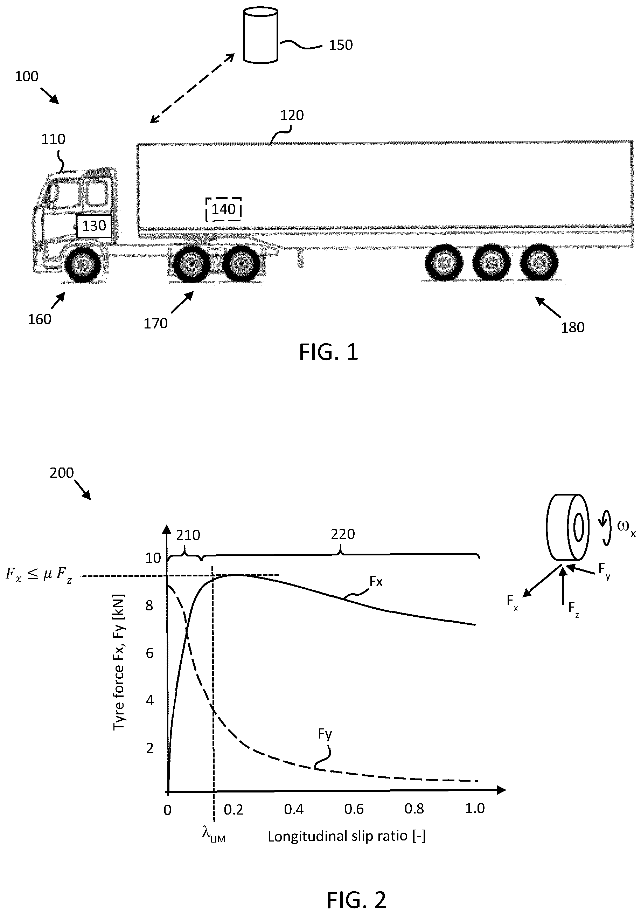

Figure 1 illustrates a heavy-duty vehicle 100. This particular example comprises a tractor unit 110 which is arranged to tow a trailer unit 120. The tractor 110 comprises a vehicle control unit (VCU) 130 arranged to control various functions of the vehicle 100. For instance, the VCU may be arranged to perform a vehicle motion management (VMM) function comprising control of wheel slip, vehicle unit stability, and so on. The trailer unit 120 optionally also comprises a VCU 140, which then controls one or more functions on the trailer 120. The VCU or VCUs may be communicatively coupled, e.g., via wireless link, to a remote server 150. This remote server 150 may be arranged to perform various configurations of the ECU, and to provide various forms of data to the ECU 130, such as providing data regarding the efficiency characteristics on on-board electric machines (EM), the make and type of tyres mounted on the vehicle 100, and other vehicle data.

The trailer unit 120 may be arranged as a self-powered trailer comprising one or more EMs and an electrical energy storage system. The trailer VCU 140 may be configured to control these EMs independently from the main tractor VCU 130, or in slave configuration to the main tractor VCU 130. The vehicle combination 100 may of course also comprise additional vehicle units, such as one or more dolly units and more than one trailer unit. These additional vehicle units may also be configured as self-powered vehicle units comprising energy sources and EMs.

The vehicle 100 is supported by wheels, where each wheel comprises a tyre. The tractor unit 110 has front wheels 160 which are normally steered, and rear wheels 170 of which at least one pair are driven wheels. Generally, the rear wheels 170 of the tractor 110 may be mounted on tag or pusher axles. A tag axle is where the rear-most drive axle is non-powered, also referred to as a free-rolling or dead axle. A pusher axle is where the forward-most drive axle is not powered. The trailer unit 120 is supported on trailer wheels 180. One or more of the trailer axles may be a driven axle.

The tyres on a wheel play a major role in determining the behavior and capabilities of the vehicle 100. A well-designed set of tyres will provide both good traction and fuel economy, while a poorly designed set of tyres, or overly worn tyres, are likely to reduce both traction and fuel economy and may even result in an unstable vehicle combination, which of course is undesired. Some important properties and characteristic parameters of a tyre will now be discussed. These tyre parameters are optionally comprised in a tyre model, either as tyre parameters from which other capabilities and characteristics of the tyre can be determined by the VCU 130, 140, or simply as tyre characteristics which can be used more or less directly by the VCU 130, 140 to optimize various control decisions. The properties of the tyres mounted on a given drive axle may be used at least in part to determine an efficiency characteristic of the associated EM drive arrangement. The tyre model may also be used to determine the wear rate if a given tyre when operated at a given wheel slip. Thus, the tyre model can be used as input to an optimization routine which balances wheel slip requested from different driven axles on the vehicle 100.

A tyre rotating at higher speeds tends to develop a larger diameter, i.e., a larger rolling radius, due to centrifugal forces that force the tread rubber away from the axis of rotation. This effect is often referred to as centrifugal growth. As the tyre diameter grows, the tyre width decreases. Excessive centrifugal growth may significantly impact the behavior of a tyre.

The pneumatic trail of a tyre is the trail-like effect generated by resilient material tyres rolling on a hard surface and subject to side loads, as in a turn. The pneumatic trail parameter of a tyre describes the distance where the resultant force of a tyre sideslip occurs behind the geometric center of the contact patch of the tyre.

Slip angle or sideslip angle, denoted $\alpha$ herein, is the angle between a rolling wheel's actual direction of travel and the direction towards which it is pointing (i.e., the angle of the vector sum of the wheel translational velocity.

The relaxation length of a tyre is a property of a pneumatic tyre that describes the delay between when a slip angle is introduced and when the cornering force reaches its steady state value. Normally, relaxation length is defined as the rolling distance needed by the tyre to reach 63% of the steady state lateral force, although other definitions are also possible.

Vertical stiffness, or spring rate, is the ratio of vertical force to vertical deflection of the tyre, and it contributes to the overall suspension performance of the vehicle. In general, spring rate increases with inflation pressure.

The contact patch, or footprint, of the tyre, is the area of the tread that is in contact with the road surface. This area transmits forces between the tyre and the road via friction. The length-to-width ratio of the contact patch affects steering and cornering behavior. The tyre tread and sidewall elements undergo deformation and recovery as they enter and exit the footprint. Since the rubber is elastomeric, it is deformed during this cycle. As the rubber deforms and recovers, it imparts cyclical forces into the vehicle. These variations are collectively referred to as tyre uniformity. Tyre uniformity is characterized by radial force variation (RFV), lateral force variation (LFV) and tangential force variation. Radial and lateral force variation is measured on a force variation machine at the end of the manufacturing process. Tyres outside the specified limits for RFV and LFV are rejected. Geometric parameters, including radial runout, lateral runout, and sidewall bulge, are measured using a tyre uniformity machine at the tyre factory at the end of the manufacturing process as a quality check.

The cornering force or side force of a tyre is the lateral (i.e. parallel to the road surface) force produced by a vehicle tyre during cornering.

Rolling resistance is the resistance to rolling caused by deformation of the tyre in contact with the road surface. As the tyre rolls, tread enters the contact area and is deformed flat to conform to the roadway. The energy required to make the deformation depends on the inflation pressure, rotating speed, and numerous physical properties of the tyre structure, such as spring force and stiffness. Tyre makers often seek lower rolling resistance tyre constructions to improve fuel economy in trucks, where rolling resistance accounts for a high proportion of fuel consumption.

Figure 2 illustrates an example tyre model 200 which incorporates at least some of the tyre properties to describe the properties of a given tyre, such as those above and also other properties. A tyre model can be used to define a relationship between longitudinal tyre force Fx for a given wheel and an equivalent longitudinal wheel slip for the wheel. Longitudinal wheel slip $\lambda_x$ relates to a difference between wheel rotational velocity and speed over ground and will be discussed in more detail below. Wheel rotation speed $\omega$ is a rotational speed of the wheel, given in units of, e.g., rotations per minute (rpm) or angular velocity in terms radians/second (rad/sec) or degrees/second (deg/sec). The wheel behavior in terms of wheel force generated in longitudinal direction (in the rolling direction) and/or lateral direction (orthogonal to the longitudinal direction) as function of wheel slip is discussed in "Tyre and vehicle dynamics", Elsevier Ltd. 2012, ISBN 978-0-08-097016-5, by Hans Pacejka. See, e.g., chapter 7 where the relationship between wheel slip and longitudinal force is discussed.

Longitudinal wheel slip $\lambda_x$ may, in accordance with SAE J670 (SAE Vehicle Dynamics Standards Committee January 24, 2008) be defined as

$$\lambda_x = \frac{R\omega_x - v_x}{max(|R\omega|, |v_x|)}$$

where $R$ is an effective wheel radius in meters, $\omega_x$ is the angular velocity of the wheel, and $v_x$ is the longitudinal speed of the wheel (in the coordinate system of the wheel). Thus, $\lambda_x$ is bounded between -1 and 1 and quantifies how much the wheel is slipping with respect to the road surface. Wheel slip is, in essence, a speed difference measured between the wheel and the vehicle. Thus, the herein disclosed techniques can be adapted for use with any type of wheel slip definition. It is also appreciated that a wheel slip value is equivalent to a wheel speed value given a velocity of the wheel over the surface, in the coordinate system of the wheel.

Lateral wheel slip $\lambda_y$ can be defined as

$$\lambda_y = \frac{v_y}{max(|R\omega|, |v_x|)}$$

where $v_y$ is the lateral speed of the wheel (in the coordinate system of the wheel), measured on a direction orthogonal to the direction of the longitudinal speed $v_x$. This disclosure is primarily focused on longitudinal wheel slip, which is the wheel slip that generates forward motion.

In order for a wheel (or tyre) to produce a wheel force, slip must occur. For smaller slip values the relationship between slip and generated force are approximately linear, where the proportionality constant is often denoted as the slip stiffness of the tyre. With reference to Figure 2, a tyre (such as any of the tyres 160, 170, 180) is subject to a longitudinal force $F_x$, a lateral force $F_y$, and a normal force $F_z$. The normal force $F_z$ is key to determining some important vehicle properties. For instance, the normal force to a large extent determines the achievable longitudinal tyre force $F_x$ by the wheel since, normally, $F_x \leq \mu F_z$, where $\mu$ is a friction coefficient associated with a road friction condition. The maximum available lateral force for a given lateral slip can be described by the so-called Magic Formula as described in "Tyre and vehicle dynamics", Elsevier Ltd. 2012, ISBN 978-0-08-097016-5, by Hans Pacejka.

Figure 2 illustrates an example of achievable

tyre forces $F_x$, $F_y$ as function of wheel slip. The longitudinal tyre force Fx shows an almost linearly increasing part 210 for small wheel slips, followed by a part 220 with more non-linear behavior for larger wheel slips. The obtainable lateral tyre force Fy decreases rapidly even at relatively small longitudinal wheel slips. It is desirable to maintain vehicle operation in the linear region 210, where the obtainable longitudinal force in response to an applied brake command is easier to predict, and where enough lateral tyre force can be generated if needed. To ensure operation in this region, a wheel slip limit $\lambda_{LIM}$ on the order of, e.g., 0.1, can be imposed on a given wheel. For larger wheel slips, e.g., exceeding 0.1, a more non-linear region 220 is seen. The present techniques primarily focus on controlling wheel slip below the imposed wheel slip limit, i.e., in the linear region 210.

A tyre model of this kind can be determined by practical experimentation, analytical derivation, computer simulation, or a combination of the above. In practice, the tyre model may be represented by a look-up table (LUT) indexed by the tyre parameters, or as a set of coefficients describing a polynomial or the like. There the set of coefficients are selected based on the tyre parameters, and where the polynomial then describes the relationship between tyre behavior and vehicle state.

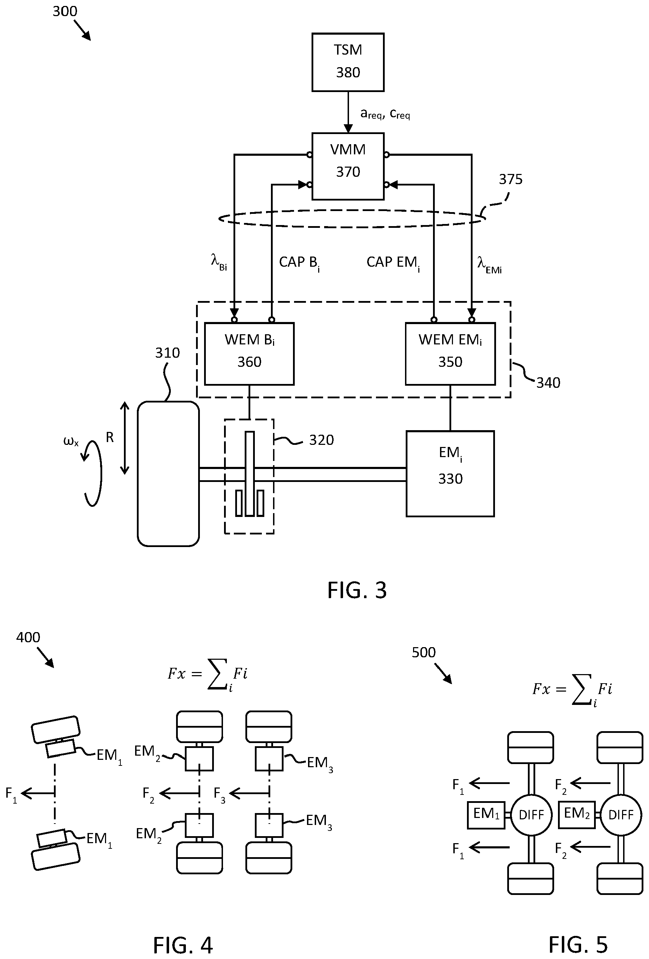

Figure 3 schematically illustrates functionality 300 for controlling a wheel 310 by some example motion support devices (MSD) here comprising a friction brake 320 (such as a disc brake or a drum brake) and an electric machine (EM) 330. The friction brake 320 and the EM 330 are examples of wheel torque generating devices, which may also be referred to as actuators and which can be controlled by one or more motion support device control units 340. The control is based on, e.g., measurement data obtained from a wheel rotation speed sensor and from other vehicle state sensors, such as radar sensors, lidar sensors, and also vision based sensors such as camera sensors and infra-red detectors. An MSD control unit 340 may be arranged to control one or more actuators. For instance, it is not uncommon that an MSD control unit is arranged to control MSDs for both wheels of an axle. The MSD control unit 340 may comprise separate wheel end module (WEM) control units 350, 360 for controlling the different actuators. By estimating vehicle unit motion using, e.g., global positioning systems, vision-based sensors, wheel rotation speed sensors, radar sensors and/or lidar sensors, and translating this vehicle unit motion into a local coordinate system of a given wheel (in terms of, e.g., longitudinal and lateral velocity components), it becomes possible to accurately estimate wheel slip in real time by comparing the vehicle unit motion in the wheel reference coordinate system to data obtained from the wheel rotation speed sensor arranged in connection to the wheel.

A traffic situation management (TSM) function 380 plans driving operations with a time horizon of, e.g., 1-10 seconds or so. This time frame corresponds to, e.g., the time it takes for the vehicle 100 to negotiate a curve.

The vehicle maneuvers, planned and executed by the TSM, can be associated with acceleration profiles and curvature profiles which describe a desired vehicle velocity and turning for a given maneuver. The TSM continuously requests the desired acceleration profiles $a_{req}$ and curvature profiles $c_{req}$ from the VMM function 370 which performs force allocation to meet the requests from the TSM in a safe and robust manner. Desired acceleration profiles and curvature profiles may optionally be determined based on input from a driver via a human machine interface of the heavy-duty vehicle via normal control input devices such as a steering wheel, accelerator pedal and brake pedal, although the techniques disclosed herein are just as applicable with autonomous or semi-autonomous vehicles. The exact methods used for determining the acceleration profiles and curvature profiles is not within scope of the present disclosure and will therefore not be discussed in more detail herein.

The VMM function 370 operates with a time horizon of about 0,1-1,5 seconds or so, and continuously transforms the acceleration profiles $a_{req}$ and curvature profiles $c_{req}$ into control commands for controlling vehicle motion functions, actuated by the different MSDs of the vehicle 100 which report back capabilities to the VMM, which in turn are used as constraints in the vehicle control. The interface 375 between VMM and MSDs capable of delivering torque to the vehicle's wheels has, traditionally, been focused on torque-based requests to each MSD from the VMM without any consideration towards wheel slip. However, this approach has significant performance limitations. In case a safety critical or excessive slip situation arises, then a relevant safety function (traction control, anti-lock brakes, etc.) operated on a separate control unit normally steps in and requests a torque override in order to bring the slip back into control. The problem with this approach is that since the primary control of the actuator and the slip control of the actuator are allocated to different electronic control units (ECUs), the latencies involved in the communication between them significantly limits the slip control performance. Moreover, the related actuator and slip assumptions made in the two ECUs that are used to achieve the actual slip control can be inconsistent and this in turn can lead to sub-optimal performance.

**Significant** benefits can be achieved by instead using a wheel speed or wheel slip based request on the interface 375 between VMM and the MSD controller or controllers 350, 360, thereby shifting the difficult actuator speed control loop to the MSD controllers, which generally operate with a much shorter sample time compared to that of the VMM function. Such an architecture can provide much better disturbance rejection compared to a torque-based control interface and thus improves the predictability of the forces generated at the tyre road contact patch. The VMM module 370 translates the required wheel forces $Fx_i$, $Fy_i$ determined for each wheel, or for a subset of wheels, into equivalent wheel speeds $\omega_{wi}$ or wheel slips $\lambda_i$ by using a tyre model, such as the tyre model in Figure 2. These wheel speeds or slips are then sent to the respective MSD control unit 340. The MSD controllers report back capabilities (CAP) which can be used as constraints.

The VMM function 370 and optionally also the MSD control unit 340 maintains information on $v_x$ (in the reference frame of the wheel), while a wheel speed sensor or the like can be used to determine $\omega_x$ (the rotational velocity of the wheel).

The VMM module 370 can be arranged to store a pre-determined tyre model in memory, e.g., as a look-up table. The inverse tyre model is arranged to be stored in the memory as a function of the current operating condition of the wheel 310. This means that the behavior of the inverse tyre model is adjusted in dependence of the operating condition of the vehicle, which means that a more accurate model is obtained compared to one which does not account for operating condition. The model which is stored in memory can be determined based on experiments and trials, or based on analytical derivation, or a combination of the two. For instance, the control unit can be configured to access a set of different models which are selected depending on the current operating conditions. One inverse tyre model can be tailored for high load driving, where normal forces are large, another inverse tyre model can be tailored for slippery road conditions where road friction is low, and so on. The selection of a model to use can be based on a pre-determined set of selection rules. The model stored in memory can also, at least partly, be a function of operating condition. Thus, the model may be configured to take, e.g., normal force or road friction as input parameters, thereby obtaining the inverse tyre model in dependence of a current operating condition of the wheel 310. It is appreciated that many aspects of the operating conditions can be approximated by default operating condition parameters, while other aspects of the operating conditions can be roughly classified into a smaller number of classes. Thus, obtaining the inverse tyre model in dependence of a current operating condition of the wheel 310 does not necessarily mean that a large number of different models need to be stored, or a complicated analytical function which is able to account for variation in operating condition with fine granularity. Rather, it may be enough with two or three different models which are selected depending on operating condition. For instance, one model to be used when the vehicle is heavily loaded and another model to be used otherwise. In all cases, the mapping between tyre force and wheel slip changes in some way in dependence of the operating condition, which improves the precision of the mapping. The inverse tyre model may also be implemented at least partly as an adaptive model configured to automatically or at least semi-automatically adapt to the current operating conditions of the vehicle. This can be achieved by constantly monitoring the response of a given wheel in terms of wheel force generated in response to a given wheel slip request, and/or monitoring the response of the vehicle 100 in response to the wheel slip requests. The adaptive model can then be adjusted to more accurately model the wheel forces obtained in response to a given wheel slip request from a wheel.

Figures 4 and 5 illustrate some examples of drive arrangements 400, 500, where a plurality of EM arrangements $EM_1$, $EM_2$, $EM_3$, are configured to power different drive axles. Generally, a vehicle unit may comprise any number of driven axles, and a driven axle may or not also be a steered axle, as indicated in Figure 4. A driven axle may comprise an open differential, as indicated in Figure 5, or wheel end motors as shown in Figure 4. The EM arrangements are configured to generate respective first, second and third longitudinal forces F1, F2 and F3, which together sum up to a desired total longitudinal force Fx.

Interesting to note is that the drive arrangement 400 shown in Figure 4 is suitable for a tractor vehicle unit 100, or for a steered dolly vehicle unit. The drive arrangement 500, on the other hand, may be a drive arrangement in a self-powered trailer, a tractor, or a dolly vehicle unit without steered axle. The control methods for controlling two drive axles may be applied in self-powered towed vehicle units with advantage, due to the reasonable computational complexity in the proposed methods.

Electric machines are generally associated with efficiency characteristics, both for positive and negative applied torque. Electric motor efficiency can be defined in different ways. However, a common definition of EM efficiency is the ratio between power output (mechanical) and power input (electrical). Mechanical power output is calculated based on the torque and speed required (i.e. power required to move the object attached to the motor), and electrical power input is calculated based on voltage and current supplied to the motor. Mechanical power output is always lower than the electrical power input, as energy is lost during conversion (electrical to mechanical) in various forms, such as heat and friction. Design of an electric motor often but not always aims to minimize these losses to improve efficiency.

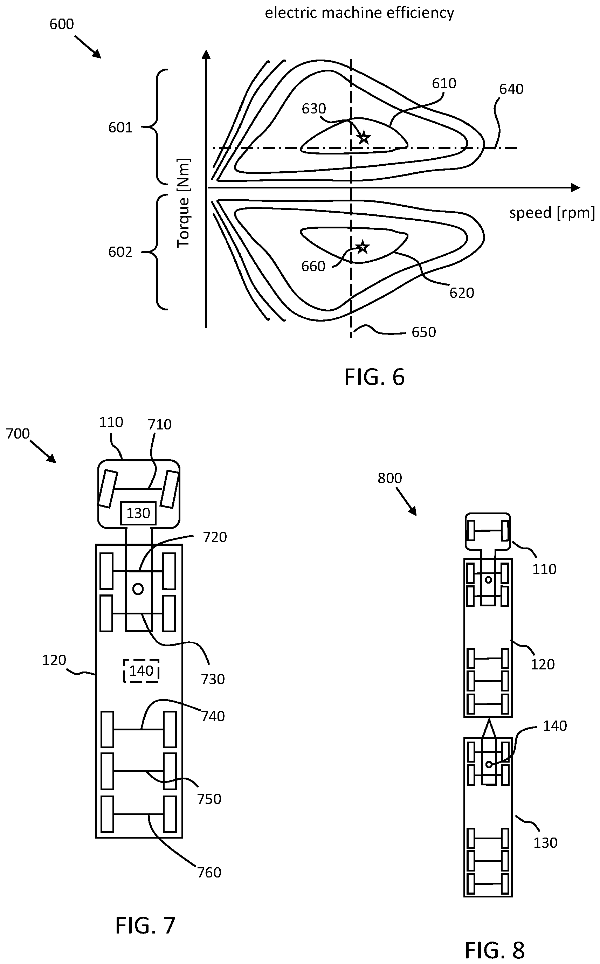

Figure 6 illustrates an example of EM efficiency characteristics 600. The efficiency is here plotted as a contour plot. Contour plots (sometimes called Level Plots) are a way to show a three-dimensional surface on a two-dimensional plane. It graphs two variables on the x-axis and y-axis and a third variable Z as contours 610, 620. These contours are sometimes called z-slices or iso-response values. Figure 6 illustrates efficiency for both positive torque 601 and negative torque 602, i.e., braking. The efficiency is often a function of motor axle speed, which translates into vehicle speed via gear ratios, wheel diameters, and such, and also of applied torque. Notably, there is a sweet-spot 630 in the example 600, where the EM is operating as maximum efficiency, any deviation from this optimum operating point will result in a reduced efficiency. Conversely, a maximum efficiency operating point 660 can be defined also for braking, where a maximum amount of energy is recuperated during braking. As discussed above, it may be desired to perform braking at this point is a battery is to be replenished during down-hill driving. However, if the battery is already at full charge, then this sweet-spot may be highly undesirable to operate at.

The different two or more EM arrangements on the drive axles of an electrically powered vehicle may be configured with different efficiency characteristics. This can be achieved, i.e., by using different types of electric machines, by using different fixed gear ratios, and/or different types of tyres on the different axles. US2010222953, mentioned above, discusses how such different energy efficiency characteristics may be used to optimize vehicle propulsion. For instance, one axle can be configured with an efficiency characteristic which has an optimum at relatively low vehicle speeds, while another axle can be configured with an efficiency optimum at higher speeds. The first axle can then be used for startability, while the other axle can be used when the vehicle is cruising at higher speeds. One axle can also be configured to generate large torque, while another axle may have a limited ability to generate torque.

However, different from the techniques described in US2010222953, it is proposed herein to instead vary the slip requests sent to the different drive axles on the vehicle 100. Thus, if the vehicle is operating at low velocity, a higher slip request value will be sent to the axle optimized for low speeds compared to the slip request sent to the drive axle optimized for higher speeds. The advantage being that the MSD controller 340 will be able to control actuators at higher bandwidth, thereby maintaining the efficiency balance more accurately compared to a control system based on torque requests sent to the different WEMs. Also, as will be discussed in more detail below, the wheel slip balancing algorithms proposed herein can be implemented with reasonable computational complexity, which is an advantage. This advantage becomes particularly pronounced in case the wheel slip balancing techniques are implemented on a vehicle unit lacking powerful processing circuitry, such as an electrified trailer vehicle unit or a self-powered dolly vehicle unit.

An electrical motor is normally operated at maximum efficiency, meaning that maximum output power is generated during regenerative braking in order to recuperate as much energy as possible during, e.g., downhill driving. However, it has been realized that there is a control freedom associated with electric machines which allow most electric machines to be operated at a reduced efficiency. The general principles of such sub-optimal energy efficiency electric machine control are described in, e.g., GB2477229B and also in US 2017/0282751 A1. An electric machine used to generate braking torque which is operated in a less energy efficient mode of operation will generate more heat and less output current compared to an electric machine that is operated at maximum efficiency.

Aspects of the present disclosure builds on the work in GB2477229B and US 2017/0282751 A1 and provides a control mechanism and a communications interface which allows the vehicle control unit 130 to balance electrical current output from the EM 330 during regenerative braking with a temperature increase in the EM during braking. In essence, the control unit 130 is, by the proposed technique, able to balance EM temperature increase with electrical storage system (ESS) energy absorption capability during extended periods of downhill driving, thereby providing an improved endurance braking capability for the heavy-duty vehicle 100 and thus a reduced need for over dimensioning the electrical system components of the vehicle 100, such as a brake resistance. According to a preferred implementation, the control unit 130 also balances the current output of the EM during driving in a predictive manner. For instance, suppose a route involves an initial flat stretch of road followed by a long downhill section. The control unit may then configure the EM in an energy inefficient mode of operation to consume more power during the drive on the flat stretch of the route, in order to ensure sufficient endurance braking capability during the long downhill part of the route. By allowing a balance between wheel slips at different driven axles of the vehicle, temperature control may be performed. The higher the requested slip - the larger the temperature increase in the EM, regardless of whether the EMs are used for propulsion of braking. Thus, according to some aspects, EM temperature is taken into account when balancing wheel slip over vehicle drive axles. A high temperature at an EM may then warrant a reduction in requested wheel slip, with an increase in wheel slip at another drive axle to compensate for the reduction. Once the high temperature EM has cooled down, the requested wheel slip may again be increased.

Figures 7 and 8 illustrate some example heavy-duty vehicles 700, 800 where the herein disclosed techniques may be used. Any of the axles 710, 720, 730, 740, 750, 760 may comprise an EM arrangement arranged for propulsion and regenerative braking. The techniques may be implemented with advantage in a tractor unit 110, in a trailer unit 120, 130, and/or in a dolly vehicle unit 140. The wheel slip balancing may be performed in a central VCU 130, or in a vehicle unit local VCU 140.

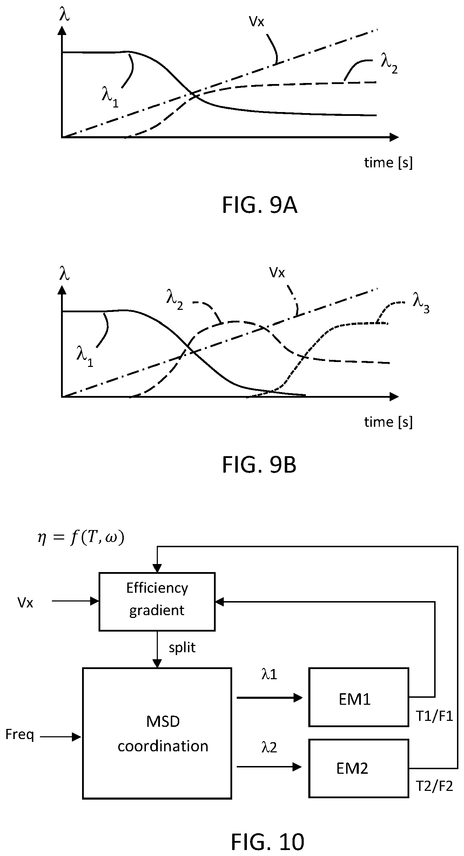

Figures 9A and 9B illustrate some examples of how the disclosed techniques may operate in a vehicle such as those illustrated in Figures 7 and 8. The vehicle in Figure 9A is accelerating at constant acceleration, meaning that the vehicle longitudinal velocity Vx increases linearly. At the beginning, a first EM arrangement is sufficient for providing the requested propulsion torque. The control unit 130 (or 140) determines that the most efficient propulsion option is to request wheel slip λ1 from the first EM arrangement, which could, e.g., be associated with the rear axle 730 of the tractor 110, or the front axle 740 of the trailer 120. However, similar to most EM arrangements, the first EM arrangement efficiency declines with the increase in motor axle speed required to support the increase in vehicle velocity, as illustrated by the dash-dotted line 640 in Figure 6. The control unit therefore starts to request a wheel slip λ2 also from a second EM arrangement configured to power another axle of the vehicle. These two wheel slip values eventually balance out at a relationship determined by the control unit to be a desired relationship in order to maintain the desired operation by the vehicle. Figure 9B shows an example where the vehicle comprises first, second, and third EM arrangements, configured to power respective first second and third driven axles. Here, the control unit determines that the first EM arrangement is most efficiently operated alone during vehicle start at a first wheel slip request λ1. The control unit then blends in the second EM arrangement at a wheel slip request λ2, whereupon the first EM arrangement contribution to the vehicle propulsion is phased out, and eventually replaced by the third EM arrangement from which a third wheel slip λ3 is requested.

To summarize the above discussions, there is disclosed herein a vehicle control unit 130, 140 arranged to control motion of a heavy-duty vehicle 100 comprising at least first and second EM arrangements EM1, EM2, where the first EM arrangement has different efficiency characteristics compared to the second EM arrangement. More than two EM arrangements are of course also possible. EM efficiency was discussed above in connection to, e.g., Figure 6, and may relate to both energy efficiency during propulsion and braking. Generally, the EM efficiency characteristic of an EM is indicative of the ability of the EM to convert electrically stored energy into propulsive force which accelerates a heavy-duty vehicle, or at least maintains a stable vehicle velocity by overcoming losses from, e.g., road friction and air resistance. The EM efficiency characteristic may be possible to modify by adjusting an operating point of the electric machine, e.g., in terms of direct and quadrature set-point, as discussed above.

The first EM arrangement EM1 may for instance have a different efficiency characteristic as function of vehicle speed Vx compared to the second EM arrangement EM2. This means that one of the EM arrangements in generally more efficient at low vehicle speeds, while the other EM arrangement is more efficient at higher vehicle speeds. The first EM arrangement EM1 may also have a different efficiency characteristic as function of applied torque or generated wheel force compared to the second EM arrangement EM2. Normally, an energy efficiency characteristic of an EM is a function of both speed and torque, as illustrated in Figure 6. It is, however, noted that simplifications are possible by not accounting for the dependency on speed or torque, only considering a subset of the relevant parameters, resulting in reduced complexity implementation. This efficiency map may, as noted above, also be adjusted for certain EM implementations, by adjusting an operating point in terms of direct and quadrature current set-points of the EM arrangement.

The first EM arrangement EM1 can be associated with a first vehicle axle and the second EM arrangement EM2 can be associated with a second vehicle axle of the heavy-duty vehicle 100. However, as discussed above in connection to Figures 8 and 9, a vehicle combination may comprise a large number of drives axles, and also separate wheel-end motors, on one or more vehicle units. Hence, the teachings herein are to be construed as applicable to a large variety of different vehicle unit types and combinations. The first EM arrangement EM1 is optionally a startability EM arrangement configured for efficiency at lower vehicle speeds, and the second EM arrangement EM2 can then be a cruise-mode EM arrangement configured for efficiency at higher vehicle speeds. Preferably, the startability EM arrangement is configured to power a vehicle unit rear axle 720, 730, and the cruise-mode EM arrangement is configured to power a vehicle unit steered axle 710. This is mainly because the steered axle is spared from load at larger steering angles, which normally only occur when the vehicle is driving slowly.

One way to realize EM arrangements with different energy characteristics is to provide a first EM arrangement EM1 which comprises one or more EMs of a different EM design and/or comprises a different gear ratio compared to the second EM arrangement EM2.

The vehicle control units disclosed herein are arranged to control the first and the second EM arrangement EM1, EM2 by transmitting wheel slip requests to respective EM control units. Here, a wheel slip request is construed to optionally also comprise a wheel speed request, as long as this wheel speed request is determined in relation to the speed of the vehicle over ground, i.e., in relation to the speed of the wheel over ground. In this case a wheel speed and a wheel slip are equivalent, at least for the purposes herein.

Thus, the transmitted wheel slip request optionally comprises or is at least indicative of a target longitudinal wheel slip given by

$$\lambda_x = \frac{R\omega_x - v_x}{max(|R\omega|, |v_x|)}$$

where R is an effective wheel radius in meters, $\omega_x$ is the angular velocity of the wheel, and $v_x$ is the longitudinal speed of the wheel over ground. According to another option, the transmitted wheel slip request comprises a target angular velocity of the wheel $\omega_x$, determined by the control unit 130, 140 in relation to a longitudinal speed $v_x$ of the wheel over ground to obtain a target longitudinal wheel slip $\lambda_x$.

The control unit 130, 140 is furthermore arranged to obtain a desired total longitudinal force Fx to be jointly generated by the first and second EM arrangements. The total longitudinal force is determined in order to generate a desired motion by the vehicle, such as a desired acceleration.

The control unit 130, 140 is arranged to determine a desired first wheel slip $\lambda 1$ corresponding to a first longitudinal force F1 generated by the first EM arrangement, and a desired second wheel slip $\lambda 2$ corresponding to a second longitudinal force F2 generated by the second EM arrangement, where the sum of the first longitudinal force F1 and the second longitudinal force F2 is matched to the desired total longitudinal force Fx. This means that the at least two EM arrangements are put to work in order to generate respective forces which together amount to the desired total longitudinal force, since the control unit 130, 140 balances the magnitude of the first wheel slip $\lambda 1$ relative to the magnitude of the second wheel slip $\lambda 2$ in dependence of the respective efficiency characteristics of the first and the second EM arrangements EM1, EM2, these two component longitudinal forces will vary.

A wheel contributing to vehicle propulsion or braking by a large wheel slip is likely to experience higher tyre wear compared to a wheel which does not generate significant wheel slip. In order to balance tyre wear over the wheels of the vehicle, it may be desired to account for estimated tyre wear in the balancing of wheel slip. Here, tyre normal load may also play an important part is the predicted tyre wear as consequence of a given wheel slip, where higher normal load often implies higher tyre wear rate compared to a wheel that is slipping under a smaller normal load. Models of tyre wear in dependence of, e.g., normal load and wheel slip may be constructed and used as input to the wheel slip balancing algorithms. In case some wheel is estimated by the model to experience high tyre wear, then the wheel slip requested from this wheel may be reduced, and vice versa. One example control method is to simply implement a wheel slip limit which prevents operation above a given wheel slip, which wheel slip limit can be determined in dependence of tyre normal load. This way, certain wheel balancing solutions become inadmissible, since they would lead to an unacceptable tyre wear rate, despite being efficient from some other perspective, such as, e.g., an energy efficiency perspective. Thus, according to some aspects, the control unit may be arranged to balance the magnitude of the first wheel slip $\lambda 1$ relative to the magnitude of the second wheel slip $\lambda 2$ based on an estimated resulting tyre wear or tyre wear rate from the current wheel slips. Normal load may also be accounted for in the balancing of wheel slip between wheels or between driven axles. Thus, according to some aspects, the control unit 130, 140 is arranged to balance the magnitude of the first wheel slip $\lambda 1$ relative to the magnitude of the second wheel slip $\lambda 2$ based on respective normal loads on axles associated with the first EM arrangement EM1 and the second EM arrangement EM2.

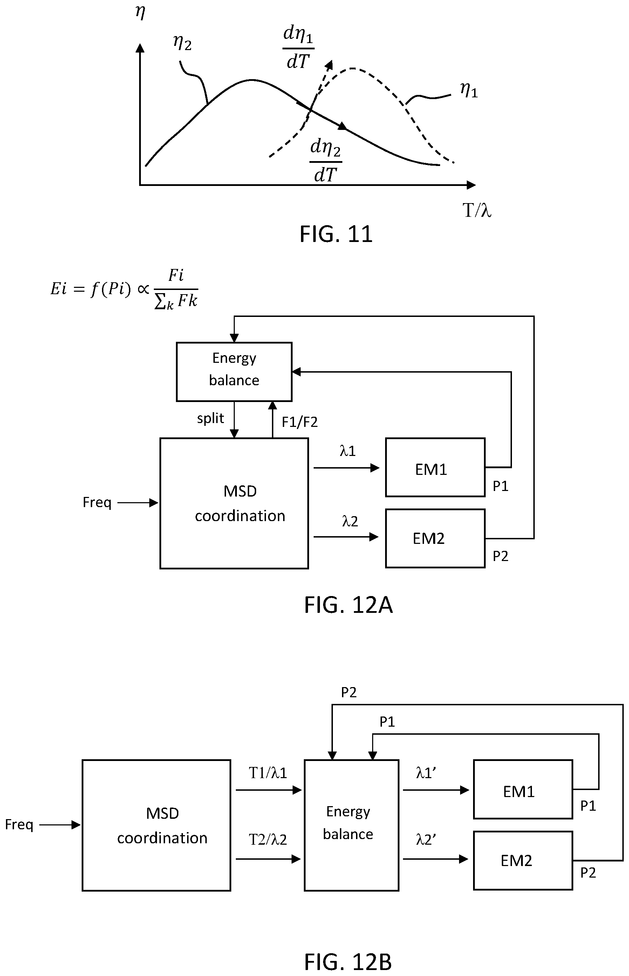

Figures 10 and 11 illustrate an example of how this wheel slip balancing can be realized in practice. Here only two EM arrangements are balanced, but more than two EM arrangements can of course also be used. An MSD coordination function receives a desired longitudinal force Freq to be generated. To meet this request, the MSD coordination function must assign first and second wheel slip requests $\lambda 1$, $\lambda 2$ to first and second EM arrangements EM1, EM2, which wheel slip requests translate into a first longitudinal force F1 generated by the first EM arrangement, and a second longitudinal force F2 generated by the second EM arrangement, where the sum of the first longitudinal force F1 and the second longitudinal force F2 is matched to the desired total longitudinal force Fx. The mapping between force and wheel slip can be determined from a tyre model such as that discussed above in connection to Figure 2. Normally, but not necessarily, "matched to" here means "equals", but some difference may of course be acceptable, at least during a transient time period. Generally, the first and the second wheel slip requests are determined such that the joint effort by the first and the second EM arrangements together provide a vehicle behavior which meets expectations from higher layers, with sufficient accuracy. The applied torques T1, T2, or estimated longitudinal forces F1 and F2 generated by the two EM arrangements are fed back to an efficiency gradient function which also receives information indicative of a current vehicle velocity Vx, i.e., how fast the vehicle travels over ground. This vehicle speed Vx may be converted into equivalent axle speeds for the two EM arrangements, since the gear ratios, wheel radius, and other vehicle parameters are known to the system. The efficiency gradient function determines an appropriate balance between the two wheel slip requests based on a relative gradient of the efficiency characteristics of the respective EM arrangements EM1, EM2 with respect to a control parameter. The approach is based on a model of efficiency where the efficiency $\eta$ is a function of applied torque $T$ or generated longitudinal wheel force F, and motor axle speed or wheel speed $\omega$, i.e.,

$$\eta = f(T/F, \omega)$$

The approach is further visualized in Figure 11, which illustrates a plot of efficiency vs wheel slip $\lambda$ (or torque T). The curves in Figure 11 may be thought of as a cross-section of the contour plot in Figure 6, along the dashed line 650. The joint overall efficiency of the drive system comprising the first and the second EM arrangement is a function of the respective efficiencies of the EM arrangements and the current balance, i.e., the split between them. With reference to Figure 11, it is realized that if the efficiency gradient

$$\frac{d\eta_1}{dT}$$

with respect to torque (or wheel force or wheel slip) of the first EM arrangement is larger compared to the efficiency gradient

$$\frac{d\eta_2}{dT}$$

with respect to torque (or wheel force or wheel slip) of the second EM arrangement, then an increase in overall efficiency can be achieved by transferring more propulsion effort onto the EM arrangement with the more positive gradient. At a balancing point where the two gradients are the same, it does not matter which may propulsion effort is transferred, since the increase in efficiency by one EM arrangement is offset by the decrease in efficiency by the other EM arrangement. Thus, as long as one gradient is more positive than then other gradient, the efficiency gradient function will transfer more propulsion effort onto the EM arrangement with the larger gradient, until a situation is reached where the gradients are the same, in which point an energy efficient mode of operation has been obtained. The split is quickly adjusted if conditions change, such as a change in vehicle velocity or a change in required acceleration by the vehicle.

According to another example, a gradient descent-based strategy can be used to find an appropriate balance between the wheel slips. Suppose that the vehicle motion management module determines that a total wheel force $F_{tot}$ is required, and that three driven axles are to generate this total force by respective wheel force contributions $F_1$, $F_2$ and $F_3$, such that $F_{tot} = F_1 + F_2 + F_3$. Suppose also that approximate functions $P_1(F_1)$, $P_2(F_2)$ and $P_3(F_3)$ relating EM power (consumed and/or regenerated) to wheel force are available, where the total consumed or regenerated power $P_{tot} = P_1(F_1) + P_2(F_2) + P_3(F_3)$. These functions may be pre-configured or determined adaptively during vehicle operation. Since a relationship between wheel force and wheel slip is available, the total consumed or regenerated power can also be formulated in terms of wheel slip as $P_{tot} = P_1(\lambda_1) + P_2(\lambda_2) + P_3(\lambda_3)$.

A cost function

$$J = P_1(\lambda_1) + P_2(\lambda_2) + P_3(\lambda_3)$$

can be formulated and then optimized (minimized or maximized) by balancing wheel slips.

Suppose that the gradient of $J$ is

$$\nabla J = \left[ \frac{\partial P_{tot}}{\partial \lambda_1}, \frac{\partial P_{tot}}{\partial \lambda_2}, \frac{\partial P_{tot}}{\partial \lambda_3} \right] = [g_1, g_2, g_3]$$

Then a gradient descent method which adjusts the i:th wheel slip by $\Delta \lambda_i$ can be formulated as $\Delta \lambda_1 = wg_1, \Delta \lambda_2 = wg_2$, where w is a step length and the third wheel slip $\lambda_2$ is adjusted to meet the total force constraint such that $F_{tot} = F_1 + F_2 + F_3$. Of course, the requested wheel slips must also meet the respective MSD capabilities in generating wheel force.

To summarize, according to some aspects, the control unit 130, 140 is arranged to balance the magnitude of the first wheel slip $\lambda 1$ relative to the magnitude of the second wheel slip $\lambda 2$ based on a relative gradient of the efficiency characteristics of the respective EM arrangements EM1, EM2 with respect to a control parameter. For instance, the control unit may be arranged to increase the first wheel slip $\lambda 1$ in case the gradient of the efficiency characteristics of the first EM arrangement EM1 is larger than the gradient of the efficiency characteristics of the second EM arrangement EM2 at a current state of the vehicle 100, and to decrease the first wheel slip $\lambda 1$ in case the gradient of the efficiency characteristics of the first EM arrangement EM1 is smaller than the gradient of the efficiency characteristics of the second EM arrangement EM2 at the current state of the vehicle 100.

Figure 12A illustrates another control approach which is based on the intuition that the energy consumption on one EM arrangement relative to the energy consumption of another EM arrangement should stand in direct proportion to the contribution mage by the EM arrangements towards the total generated propulsion force. That is, the energy consumed by the i:th EM arrangement $Ei$, which is a function of the drawn power $Pi$, should be proportional to the ration of generated propulsion force by the i:th EM arrangement relative to the total propulsion force generated by all EM arrangements on the vehicle, as

$$Ei = f(Pi) \propto \frac{Fi}{\sum_k Fk}$$

In other words, according to some aspects, the control unit 130, 140 is arranged to balance the magnitude of the first wheel slip $\lambda 1$ relative to the magnitude of the second wheel slip $\lambda 2$ based on a relative power consumption P1, P2 of the first and the second EM arrangements EM1, EM2 in comparison to a magnitude relationship between the first longitudinal force F1 and the second longitudinal force F2. This represents a particularly simple way to balance wheel slips. With reference to Figure 12, the MSD coordination function receives a request for a total longitudinal force to be generated by the set of EM arrangements controlled from the MSD coordinator. The MSD coordinator determines first and second wheel slips $\lambda 1$, $\lambda 2$ which together translate into wheel forces that together match the total longitudinal force request Freq. The split is determined by an energy balancing function, which monitors consumed power by the two EM arrangements EM1, EM2, and compared these drawn powers to the allocated first longitudinal force F1 and second longitudinal force F2. In case one EM arrangement contributes less force than warranted by its share in the overall energy consumption, the respective wheel slip will be decreased, and vice versa. Thus, the control unit 130, 140 is arranged to increase the first wheel slip $\lambda 1$ in case a ratio between the power consumption of the first EM arrangement EM1 and the power consumption of the second EM arrangement EM2 is smaller than a corresponding ratio between the first longitudinal force F1 and the second longitudinal force F2, and to decrease the first wheel slip $\lambda1$ in case the ratio between the power consumption of the first EM arrangement EM1 and the power consumption of the second EM arrangement EM2 is larger than the corresponding ratio between the first longitudinal force F1 and the second longitudinal force F2.

The wheel slip balancing functionality may of course be further simplified, by use of pre-determined wheel slip splits, such as a look-up table which can be indexed based on one or more operating scenario parameters. According to some such aspects, the control unit 130, 140 is arranged to balance the magnitude of the first wheel slip $\lambda1$ relative to the magnitude of the second wheel slip $\lambda2$ based on a pre-determined balancing function parameterized by vehicle speed. According to some other such aspects, the control unit 130, 140 is arranged to balance the magnitude of the first wheel slip $\lambda1$ relative to the magnitude of the second wheel slip $\lambda2$ based on a pre-determined balancing function parameterized by the total longitudinal force Fx.

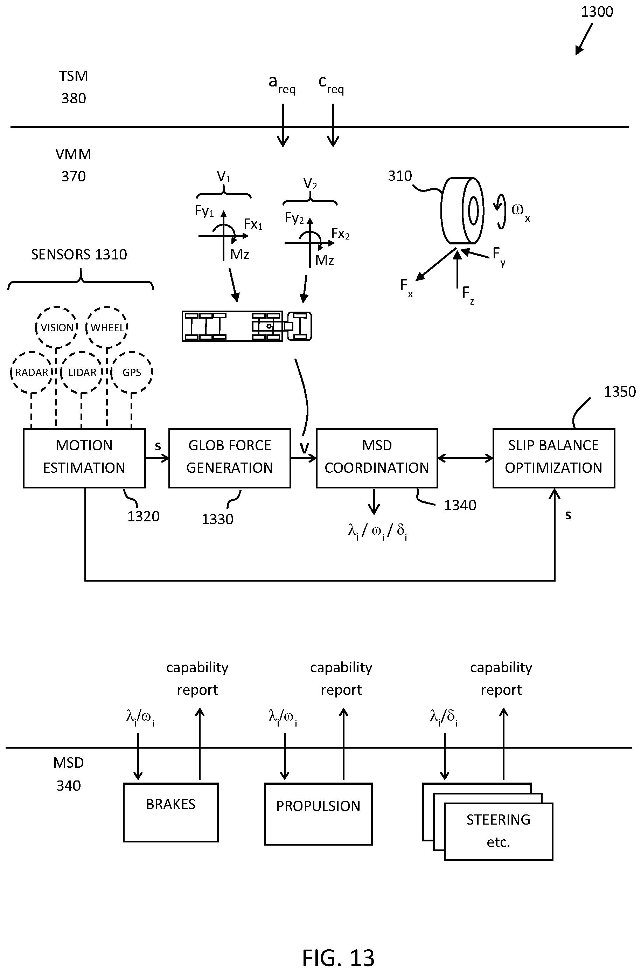

Figure 12B shows an example control approach where the wheel slip balancing function is implemented as an add-on to an existing vehicle motion management system. Here, the MSD coordination block receives a total longitudinal force request Freq and determines suitable torques T1/T2 or wheel slips $\lambda1/\lambda2$ to be generated by the different propulsion units. An energy balancing function the modifies the requests from the MSD coordination unit into new wheel slip requests $\lambda1'/\lambda2'$ that are balanced according to the present teaching. Notably, the balancing may only be performed when the vehicle is driving straight, i.e., not during cornering, since the wheel slip balancing may affect vehicle behavior during cornering. A maximum yaw motion threshold may be used to determine when the slip balancing can be performed, and when it should be inactivated. As discussed previously, the power feedback from the Ems may be used to determine a suitable wheel slip split. Figure 13 shows an example layered control stack architecture where the techniques disclosed herein may be put to use. The TSM function 380 discussed above plans driving operations with a time horizon of, e.g., 1-10 seconds or so. The TSM function 380 interacts with the VMM function 370 which operates with a time horizon of about 0,1-1,5 seconds or so, and continuously transforms the acceleration profiles $a_{req}$ and curvature profiles $c_{req}$ from the TSM 380 into control commands for controlling vehicle motion functions, actuated by the different MSDs of the vehicle 100 which report back capabilities to the VMM, which in turn are used as constraints in the vehicle control.

The VMM function 370 performs vehicle state or motion estimation 1320, i.e., the VMM function 370 continuously determines a vehicle state **s** (often a vector variable) comprising positions, speeds, accelerations, yaw motions, normal forces, and articulation angles of the different units in the vehicle combination by monitoring vehicle state and behavior using various sensors 1310 arranged on the vehicle 100, often but not always in connection to the MSDs.

The result of the motion estimation 1320, i.e., the estimated vehicle state **s,** is input to a global force generation module 1330 which determines the required global forces on the vehicle units which need to be generated in order to meet the motion requests from the TSM function 380. An MSD coordination function 1340 allocates, e.g., wheel forces and coordinates other MSDs such as steering and suspension. The coordinated MSDs then together provide the desired lateral Fy and longitudinal Fx forces on the vehicle units, as well as the required moments Mz, to obtain the desired motion by the vehicle combination 100. As indicated in Figure 13, the MSD coordination function 1340 may output any of wheel slips $\lambda_i$, wheel rotation speeds $\omega$, and/or steering angles $\delta_l$ to the different MSDs.

The wheel slip balancing techniques discussed above are here realized in the slip balance optimization function 1350, which interacts with the MSD coordination function. The slip balance optimization function may, e.g., operate according to the principles discussed above in connection to Figure 11 or Figure 12, and other implementations are of course also possible. The MSD coordination function 1340 allocates forces to the different MSDs, while taking account of the desired wheel slip balance, or wheel slip split determined at least partly by the slip balance optimization module. The input from the slip balance optimization module may either be used in the MSD coordination function as an additional constraint to be considered in the overall optimization procedure, or as a pre-requisite.

It is noted that the MSD coordination function 1340 may be a relatively simple coordination function, where a desired total longitudinal force to be generated by, e.g. a self-powered trailer vehicle unit or a self-powered dolly vehicle unit is to be split over two or more axles of the vehicle unit, or over two or more axles of the articulated vehicle combination. The input from the slip balancing function 1350 may then be implemented as is without further optimizations, i.e., the total desired force is split over the two or more drive axles in dependence of the split decision obtained from the slip balance optimization function 1350 and in dependence of the tyre model which is used to translate the desired longitudinal wheel forces into equivalent wheel slip values (or wheel speed values determined after accounting for vehicle speed over ground).

Notable, the slip balance optimization 1350 may determine wheel slip splits separately per vehicle unit, or jointly for the entire articulated vehicle.

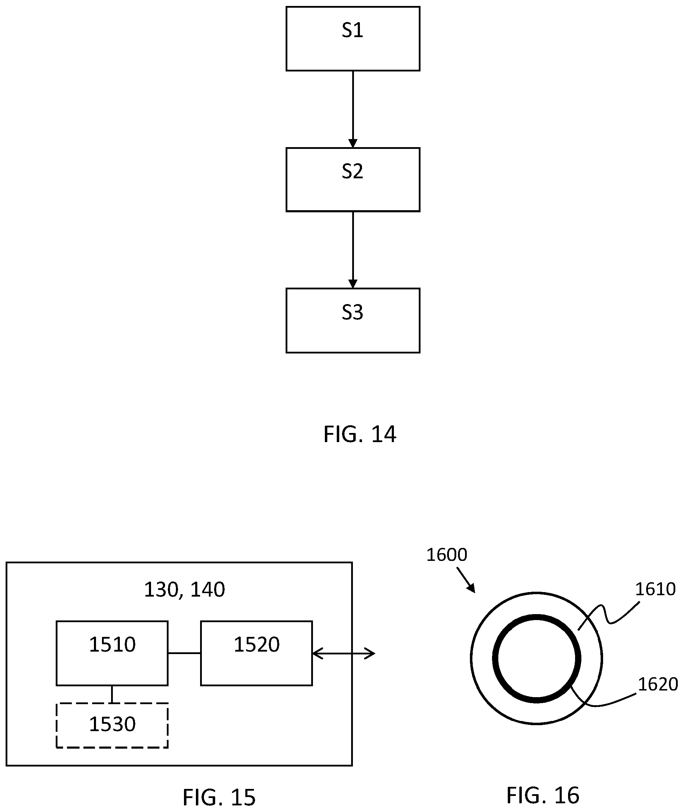

Figure 14 is a flow chart illustrating methods which summarize the discussions above. The method is designed to be performed in a vehicle control unit 130, 140 arranged to control motion of a heavy-duty vehicle 100 comprising first and second electric machine, EM, arrangements EM1, EM2, where the first EM arrangement has a different efficiency characteristic compared to the second EM arrangement. Also, as discussed above, the vehicle control unit 130, 140 is arranged to control the first and the second EM arrangement EM1, EM2 by transmitting wheel slip requests to respective EM control units.

The method comprises obtaining S1 a desired total longitudinal force Fx to be jointly generated by the first and second EM arrangements,

determining S2 a desired first wheel slip λ1 corresponding to a first longitudinal force F1 generated by the first EM arrangement, and a desired second wheel slip λ2 corresponding to a second longitudinal force F2 generated by the second EM arrangement, where the sum of the first longitudinal force F1 and the second longitudinal force F2 corresponds to the desired total longitudinal force Fx, and

balancing S3 a magnitude of the first wheel slip λ1 relative to a magnitude of the second wheel slip λ2 in dependence of the respective efficiency characteristics of the first and the second EM arrangements EM1, EM2.

Figure 15 schematically illustrates, in terms of a number of functional units, the components of a control unit 130, 140 according to embodiments of the discussions herein, such as any of the VUCs 130, 140. This control unit 130, 140 may be comprised in the articulated vehicle 1. Processing circuitry 1510 is provided using any combination of one or more of a suitable central processing unit CPU, multiprocessor, microcontroller, digital signal processor DSP, etc., capable of executing software instructions stored in a computer program product, e.g. in the form of a storage medium 1530. The processing circuitry 1510 may further be provided as at least one application specific integrated circuit ASIC, or field programmable gate array FPGA.

Particularly, the processing circuitry 1510 is configured to cause the control unit 130, 140 to perform a set of operations, or steps, such as the methods discussed in connection to Figure 14. For example, the storage medium 1530 may store the set of operations, and the processing circuitry 1510 may be configured to retrieve the set of operations from the storage medium 1530 to cause the control unit 130, 140 to perform the set of operations. The set of operations may be provided as a set of executable instructions. Thus, the processing circuitry 1510 is thereby arranged to execute methods as herein disclosed.

The storage medium 1530 may also comprise persistent storage, which, for example, can be any single one or combination of magnetic memory, optical memory, solid state memory or even remotely mounted memory.

The control unit 130, 140 may further comprise an interface 1520 for communications with at least one external device. As such the interface 1520 may comprise one or more transmitters and receivers, comprising analogue and digital components and a suitable number of ports for wireline or wireless communication.

The processing circuitry 1510 controls the general operation of the control unit 130, 140, e.g., by sending data and control signals to the interface 1520 and the storage medium 1530, by receiving data and reports from the interface 1520, and by retrieving data and instructions from the storage medium 1530. Other components, as well as the related functionality, of the control node are omitted in order not to obscure the concepts presented herein.

Figure 16 illustrates a computer readable medium 1610 carrying a computer program comprising program code means 1620 for performing the methods illustrated in Figure 14, when said program product is run on a computer. The computer readable medium and the code means may together form a computer program product 1600.

**Claims**

1. A vehicle control unit (130, 140) arranged to control motion of a heavy-duty vehicle (100) comprising first and second electric machine, EM, arrangements (EM1, EM2), where the first EM arrangement has different efficiency characteristics compared to the second EM arrangement,

wherein the vehicle control unit (130, 140) is arranged to control the first and the second EM arrangement (EM1, EM2) by transmitting wheel slip requests to respective EM control units,
wherein the control unit (130, 140) is arranged to obtain a desired total longitudinal force (Fx) to be jointly generated by the first and second EM arrangements, and to obtain respective efficiency characteristics of the first and the second EM arrangements (EM1, EM2),
wherein the control unit (130, 140) is arranged to determine a desired first wheel slip (λ1) corresponding to a first longitudinal force (F1) generated by the first EM arrangement, and a desired second wheel slip (λ2) corresponding to a second longitudinal force (F2) generated by the second EM arrangement, where the sum of the first longitudinal force (F1) and the second longitudinal force (F2) is matched to the desired total longitudinal force (Fx),
**characterised in that** the control unit (130, 140) is arranged to balance a magnitude of the first wheel slip (λ1) relative to a magnitude of the second wheel slip (λ2) in dependence of the respective efficiency characteristics of the first and the second EM arrangements (EM1, EM2).

2. The vehicle control unit (130, 140) according to claim 1, where the first EM arrangement (EM1) has a different efficiency characteristic as function of vehicle speed (Vx) compared to the second EM arrangement (EM2).

3. The vehicle control unit (130, 140) according to claim 1 or 2, where the first EM arrangement (EM1) has a different efficiency characteristic as function of applied torque or wheel force compared to the second EM arrangement (EM2).

4. The vehicle control unit (130, 140) according to any previous claim, where the first EM arrangement (EM1) comprises one or more EMs of a different EM design and/or comprises a different gear ratio compared to the second EM arrangement (EM2).

5. The vehicle control unit (130, 140) according to any previous claim, where the first EM arrangement (EM1) is associated with a first vehicle axle and the second EM arrangement (EM2) is associated with a second vehicle axle of the heavy-duty vehicle (100).

6. The vehicle control unit (130, 140) according to any previous claim, where the first EM arrangement (EM1) is a startability EM arrangement configured for efficiency at lower vehicle speeds, and where the second EM arrangement (EM2) is a cruise-mode EM arrangement configured for efficiency at higher vehicle speeds.

7. The vehicle control unit (130, 140) according to claim 6, where the startability EM arrangement is configured to power a vehicle unit rear axle (720, 730), and where the cruise-mode EM arrangement is configured to power a vehicle unit steered axle (710).

8. The vehicle control unit (130, 140) according to any previous claim, wherein the control unit (130, 140) is arranged to balance the magnitude of the first wheel slip ($\lambda$1) relative to the magnitude of the second wheel slip ($\lambda$2) based on a relative gradient of the efficiency characteristics of the respective EM arrangements (EM1, EM2) with respect to a control parameter.

9. The vehicle control unit (130, 140) according to claim 8, wherein the control unit is arranged to increase the first wheel slip ($\lambda$1) in case the gradient of the efficiency characteristics of the first EM arrangement (EM1) is larger than the gradient of the efficiency characteristics of the second EM arrangement (EM2) at a current state of the vehicle (100), and to decrease the first wheel slip ($\lambda$1) in case the gradient of the efficiency characteristics of the first EM arrangement (EM1) is smaller than the gradient of the efficiency characteristics of the second EM arrangement (EM2) at the current state of the vehicle (100).

10. The vehicle control unit (130, 140) according to any previous claim, wherein the control unit (130, 140) is arranged to balance the magnitude of the first wheel slip ($\lambda$1) relative to the magnitude of the second wheel slip ($\lambda$2) based on a relative power consumption (P1, P2) of the first and the second EM arrangements (EM1, EM2) in comparison to a magnitude relationship between the first longitudinal force (F1) and the second longitudinal force (F2).

11. The vehicle control unit (130, 140) according to claim 10, wherein the control unit (130, 140) is arranged to increase the first wheel slip ($\lambda$1) in case a ratio between the power consumption of the first EM arrangement (EM1) and the power consumption of the second EM arrangement (EM2) is smaller than a corresponding ratio between the first longitudinal force (F1) and the second longitudinal force (F2), and to decrease the first wheel slip ($\lambda$1) in case the ratio between the power consumption of the first EM arrangement (EM1) and the power consumption of the second EM arrangement (EM2) is larger than the corresponding ratio between the first longitudinal force (F1) and the second longitudinal force (F2).

12. The vehicle control unit (130, 140) according to any previous claim, wherein the control unit (130, 140) is arranged to balance the magnitude of the first wheel slip ($\lambda$1) relative to the magnitude of the second wheel slip ($\lambda$2) based on a pre-determined balancing function parameterized by vehicle speed.

13. The vehicle control unit (130, 140) according to any previous claim, wherein the control unit (130, 140) is arranged to balance the magnitude of the first wheel slip ($\lambda$1) relative to the magnitude of the second wheel slip ($\lambda$2) based on a pre-determined balancing function parameterized by the total longitudinal force (Fx).

14. The vehicle control unit (130, 140) according to any previous claim, wherein the transmitted wheel slip request comprises a target longitudinal wheel slip given by

$$\lambda_x = \frac{R\omega_x - v_x}{max(|R\omega|, |v_x|)}$$

where R is an effective wheel radius in meters, $\omega_x$ is the angular velocity of the wheel, and $v_x$ is the long-

itudinal speed of the wheel over ground.

**15.** The vehicle control unit (130, 140) according to any of claims 1-13, wherein the transmitted wheel slip request comprises a target angular velocity of the wheel ($\omega_x$), determined by the control unit (130, 140) in relation to a longitudinal speed $v_x$ of the wheel over ground to obtain a target longitudinal wheel slip $\lambda_x$.

**16.** The vehicle control unit (130, 140) according to any previous claim, wherein the control unit (130, 140) is arranged to balance the magnitude of the first wheel slip ($\lambda1$) relative to the magnitude of the second wheel slip ($\lambda2$) based on an estimated tyre wear or tyre wear rate resulting from the first wheel slip ($\lambda1$) and from the second wheel slip ($\lambda2$).

**17.** The vehicle control unit (130, 140) according to any previous claim, wherein the control unit (130, 140) is arranged to balance the magnitude of the first wheel slip ($\lambda1$) relative to the magnitude of the second wheel slip ($\lambda2$) based on respective normal loads on axles associated with the first EM arrangement (EM1) and the second EM arrangement (EM2).

**18.** A heavy-duty vehicle (100, 110, 120) comprising a vehicle control unit (130, 140) according to any previous claim.

**19.** A towed vehicle unit, such as a self-powered trailer (120, 130) or a self-powered dolly vehicle unit (140), comprising a vehicle control unit (140) according to any previous claim, where the towed vehicle unit comprises a first axle and a second axle, where the first axle is arranged to be driven by the first EM arrangement (EM1) and where the second axle is arranged to be driven by the second EM arrangement (EM1).

**20.** A method performed in a vehicle control unit (130, 140) arranged to control motion of a heavy-duty vehicle (100) comprising first and second electric machine, EM, arrangements (EM1, EM2), where the first EM arrangement has a different efficiency characteristic compared to the second EM arrangement,

> wherein the vehicle control unit (130, 140) is arranged to control the first and the second EM arrangement (EM1, EM2) by transmitting wheel slip requests to respective EM control units,
> the method comprising
> obtaining (S1) a desired total longitudinal force (Fx) to be jointly generated by the first and second EM arrangements, and obtaining respective efficiency characteristics of the first and the second EM arrangements (EM1, EM2),

> determining (S2) a desired first wheel slip ($\lambda1$) corresponding to a first longitudinal force (F1) generated by the first EM arrangement, and a desired second wheel slip ($\lambda2$) corresponding to a second longitudinal force (F2) generated by the second EM arrangement, where the sum of the first longitudinal force (F1) and the second longitudinal force (F2) corresponds to the desired total longitudinal force (Fx), and **characterised in that** the method furhter comprises balancing (S3) a magnitude of the first wheel slip ($\lambda1$) relative to a magnitude of the second wheel slip ($\lambda2$) in dependence of the respective efficiency characteristics of the first and the second EM arrangements (EM1, EM2).

**21.** A computer program comprising program code means (1620) for performing the steps of claim 20 when said program is run on a vehicle control unit (130, 140) according to claim 1.

**22.** A computer readable medium (1610) carrying a computer program comprising program code means for performing the steps of claim 20 when said program product is run on a vehicle control unit (130, 140) according to claim 1.

**Patentansprüche**

**1.** Fahrzeugsteuereinheit (130, 140), die angeordnet ist, um eine Bewegung eines Schwerlastfahrzeugs (100) zu steuern, umfassend eine erste und eine zweite Anordnung einer elektrischen Maschine (EM1, EM2), wobei die erste EM-Anordnung im Vergleich zu der zweiten EM-Anordnung unterschiedliche Effizienzmerkmale aufweist,

> wobei die Fahrzeugsteuereinheit (130, 140) angeordnet ist, um die erste und die zweite EM-Anordnung (EM1, EM2) zu steuern, indem es Radschlupfanforderungen an jeweilige EM-Steuereinheiten überträgt,
> wobei die Steuereinheit (130, 140) angeordnet ist, um eine gewünschte Gesamtlängskraft (Fx) zu erlangen, die gemeinsam von der ersten und der zweiten EM-Anordnung erzeugt werden soll, und um entsprechende Effizienzmerkmale der ersten und der zweiten EM-Anordnung (EM1, EM2) zu erlangen,
> wobei die Steuereinheit (130, 140) angeordnet ist, um einen gewünschten ersten Radschlupf ($\lambda1$) entsprechend einer ersten Längskraft (F1), die durch die erste EM-Anordnung erzeugt wird, und einen gewünschten zweiten Radschlupf ($\lambda2$) entsprechend einer zweiten Längskraft (F2), die durch die zweite EM-Anordnung erzeugt wird, zu bestimmen, wobei die Summe

16

der ersten Längskraft (F1) und der zweiten Längskraft (F2) an die gewünschte Gesamtlängskraft (Fx) angepasst ist, **dadurch gekennzeichnet, dass** die Steuereinheit (130, 140) angeordnet ist, um eine Größe des ersten Radschlupfs ($\lambda$1) in Bezug auf eine Größe des zweiten Radschlupfs ($\lambda$2) abhängig von den jeweiligen Effizienzmerkmalen der ersten und der zweiten EM-Anordnung (EM1, EM2) auszugleichen.

2.  Fahrzeugsteuereinheit (130, 140) nach Anspruch 1, wobei die erste EM-Anordnung (EM1) im Vergleich zu der zweiten EM-Anordnung (EM2) ein anderes Effizienzmerkmal abhängig von der Fahrzeuggeschwindigkeit (Vx) aufweist.

3.  Fahrzeugsteuereinheit (130, 140) nach Anspruch 1 oder 2, wobei die erste EM-Anordnung (EM1) im Vergleich zu der zweiten EM-Anordnung (EM2) ein anderes Effizienzmerkmal abhängig von dem anliegenden Drehmoment bzw. der Radkraft aufweist.

4.  Fahrzeugsteuereinheit (130, 140) nach einem vorherigen Anspruch, wobei die erste EM-Anordnung (EM1) eine oder mehrere EMs einer anderen EM-Konstruktion und/oder ein anderes Übersetzungsverhältnis als die zweite EM-Anordnung (EM2) aufweist.

5.  Fahrzeugsteuereinheit (130, 140) nach einem der vorherigen Ansprüche, wobei die erste EM-Anordnung (EM1) mit einer ersten Fahrzeugachse assoziiert ist und die zweite EM-Anordnung (EM2) mit einer zweiten Fahrzeugachse des Schwerlastfahrzeugs (100) assoziiert ist.

6.  Fahrzeugsteuereinheit (130, 140) nach einem der vorherigen Ansprüche, wobei die erste EM-Anordnung (EM1) eine Startfähigkeits-EM-Anordnung ist, die für Effizienz bei niedrigeren Fahrzeuggeschwindigkeiten konfiguriert ist, und wobei die zweite EM-Anordnung (EM2) eine Fahrmodus-EM-Anordnung ist, die für Effizienz bei höheren Fahrzeuggeschwindigkeiten konfiguriert ist.

7.  Fahrzeugsteuereinheit (130, 140) nach Anspruch 6, wobei die Startfähigkeits-EM-Anordnung konfiguriert ist, um eine Fahrzeugeinheit-Hinterachse (720, 730) anzutreiben, und wobei die Fahrmodus-EM-Anordnung konfiguriert ist, um eine Fahrzeugeinheit-Lenkachse (710) anzutreiben.

8.  Fahrzeugsteuereinheit (130, 140) nach einem der vorherigen Ansprüche, wobei die Steuereinheit (130, 140) angeordnet ist, um die Größe des ersten Radschlupfs ($\lambda$1) in Bezug auf die Größe des zweiten Radschlupfs ($\lambda$2) basierend auf einem relativen Gradienten des Effizienzmerkmals der jeweiligen EM-Anordnungen (EM1, EM2) in Bezug auf einen Steuerparameter auszugleichen.

9.  Fahrzeugsteuereinheit (130, 140) nach Anspruch 8, wobei die Steuereinheit angeordnet ist, um den ersten Radschlupf ($\lambda$1) in einem Fall zu erhöhen, in dem der Gradient des Effizienzmerkmals der ersten EM-Anordnung (EM1) größer ist als der Gradient des Effizienzmerkmals der zweiten EM-Anordnung (EM2) bei einem aktuellen Zustand des Fahrzeugs (100), und den ersten Radschlupf ($\lambda$1) in einem Fall zu verringern, in dem der Gradient des Effizienzmerkmals der ersten EM-Anordnung (EM1) kleiner ist als der Gradient des Effizienzmerkmals der zweiten EM-Anordnung (EM2) in dem aktuellen Zustand des Fahrzeugs (100).

10. Fahrzeugsteuereinheit (130, 140) nach einem der vorherigen Ansprüche, wobei die Steuereinheit (130, 140) angeordnet ist, um die Größe des ersten Radschlupfs ($\lambda$1) in Bezug auf die Größe des zweiten Radschlupfs ($\lambda$2) basierend auf einer relativen Leistungsaufnahme (P1, P2) der ersten und der zweiten EM-Anordnung (EM1, EM2) im Vergleich zu einem Größenverhältnis zwischen der ersten Längskraft (F1) und der zweiten Längskraft (F2) auszugleichen.

11. Fahrzeugsteuereinheit (130, 140) nach Anspruch 10, wobei die Steuereinheit (130, 140) angeordnet ist, um den ersten Radschlupf ($\lambda$1) in einem Fall zu erhöhen, in dem ein Verhältnis zwischen der Leistungsaufnahme der ersten EM-Anordnung (EM1) und der Leistungsaufnahme der zweiten EM-Anordnung (EM2) kleiner ist als ein entsprechendes Verhältnis zwischen der ersten Längskraft (F1) und der zweiten Längskraft (F2), und den ersten Radschlupf ($\lambda$1) in einem Fall zu verringern, in dem das Verhältnis zwischen der Leistungsaufnahme der ersten EM-Anordnung (EM1) und der Leistungsaufnahme der zweiten EM-Anordnung (EM2) größer ist als das entsprechende Verhältnis zwischen der ersten Längskraft (F1) und der zweiten Längskraft (F2).

12. Fahrzeugsteuereinheit (130, 140) nach einem der vorherigen Ansprüche, wobei die Steuereinheit (130, 140) angeordnet ist, um die Größe des ersten Radschlupfs ($\lambda$1) in Bezug auf die Größe des zweiten Radschlupfs ($\lambda$2) basierend auf einer vorbestimmten Ausgleichsfunktion, die durch die Fahrzeuggeschwindigkeit parametriert ist, auszugleichen.

13. Fahrzeugsteuereinheit (130, 140) nach einem der vorherigen Ansprüche, wobei die Steuereinheit (130, 140) angeordnet ist, um die Größe des ersten Radschlupfs ($\lambda$1) in Bezug auf die Größe des zweiten Radschlupfs (λ2) basierend auf einer vorbestimmten Ausgleichsfunktion, die durch die Gesamtlängskraft (Fx) parametriert ist, auszugleichen.

14. Fahrzeugsteuereinheit (130, 140) nach einem der vorherigen Ansprüche, wobei die übertragene Radschlupfanforderung einen Soll-Längsradschlupf umfasst, der gegeben ist durch

$$\lambda_x = \frac{R\omega_x - v_x}{max(|R\omega|, |v_x|)}$$

wobei R ein effektiver Radradius in Metern ist, $\omega_x$ die Winkelgeschwindigkeit des Rads ist und $v_x$ die Längsgeschwindigkeit des Rads auf dem Boden ist.

15. Fahrzeugsteuereinheit (130, 140) nach einem der Ansprüche 1-13, wobei die übertragene Radschlupfanforderung eine Soll-Winkelgeschwindigkeit des Rads ($\omega_x$) umfasst, die von der Steuereinheit (130, 140) in Bezug auf eine Längsgeschwindigkeit $v_x$ des Rads auf dem Boden bestimmt wird, um einen Soll-Längsradschlupf $\lambda_x$ *zu erlangen.*

16. Fahrzeugsteuereinheit (130, 140) nach einem der vorherigen Ansprüche, wobei die Steuereinheit (130, 140) angeordnet ist, um die Größe des ersten Radschlupfs (λ1) in Bezug auf die Größe des zweiten Radschlupfs (λ2) basierend auf einem geschätzten Reifenverschleiß oder einer geschätzten Reifenverschleißrate, die aus dem ersten Radschlupf (λ1) und aus dem zweiten Radschlupf (λ2) resultiert, auszugleichen.

17. Fahrzeugsteuereinheit (130, 140) nach einem der vorherigen Ansprüche, wobei die Steuereinheit (130, 140) angeordnet ist, um die Größe des ersten Radschlupfs (λ1) in Bezug auf die Größe des zweiten Radschlupfs (λ2) basierend auf den jeweiligen Normallasten auf Achsen auszugleichen, die mit der ersten EM-Anordnung (EM1) und der zweiten EM-Anordnung (EM2) assoziiert sind.

18. Schwerlastfahrzeug (100, 110, 120), umfassend eine Fahrzeugsteuereinheit (130, 140) nach einem der vorherigen Ansprüche.

19. Gezogene Fahrzeugeinheit, wie beispielsweise ein selbstangetriebener Anhänger (120, 130) oder eine selbstangetriebene Rollfahrzeugeinheit (140), umfassend eine Fahrzeugsteuereinheit (140) nach einem der vorherigen Ansprüche, wobei die gezogene Fahrzeugeinheit eine erste Achse und eine zweite Achse umfasst, wobei die erste Achse angeordnet ist, um von der ersten EM-Anordnung (EM1) angetrieben zu werden, und wobei die zweite Achse angeordnet ist, um von der zweiten EM-Anordnung (EM1) angetrieben zu werden.

20. Verfahren, das in einer Fahrzeugsteuereinheit (130, 140) durchgeführt wird, die angeordnet ist, um eine Bewegung eines Schwerlastfahrzeugs (100) zu steuern, umfassend eine erste und eine zweite Anordnung einer elektrischen Maschine (EM1, EM2), wobei die erste EM-Anordnung im Vergleich zu der zweiten EM-Anordnung unterschiedliche Effizienzmerkmale aufweist,

wobei die Fahrzeugsteuereinheit (130, 140) angeordnet ist, um die erste und die zweite EM-Anordnung (EM1, EM2) zu steuern, indem es Radschlupfanforderungen an jeweilige EM-Steuereinheiten überträgt, das Verfahren umfassend
Erlangen (S1) einer gewünschten Gesamtlängskraft (Fx), die gemeinsam von der ersten und der zweiten EM-Anordnung erzeugt werden soll, und Erlangen der jeweiligen Effizienzmerkmale der ersten und der zweiten EM-Anordnung (EM1, EM2),
Bestimmen (S2) eines gewünschten ersten Radschlupfs (λ1), der einer ersten Längskraft (F1) entspricht, die von der ersten EM-Anordnung erzeugt wird, und eines gewünschten zweiten Radschlupfs (λ2), der einer zweiten Längskraft (F2) entspricht, die von der zweiten EM-Anordnung erzeugt wird, wobei die Summe der ersten Längskraft (F1) und der zweiten Längskraft (F2) der gewünschten Gesamtlängskraft (Fx) entspricht, und **dadurch gekennzeichnet, dass** das Verfahren ferner Folgendes umfasst
Ausgleichen (S3) einer Größe des ersten Radschlupfs (λ1) in Bezug auf eine Größe des zweiten Radschlupfs (λ2) abhängig von den jeweiligen Effizienzmerkmalen der ersten und der zweiten EM-Anordnung (EM1, EM2).

21. Computerprogramm, umfassend Programmcodeeinrichtungen (1620) zum Durchführen der Schritte nach Anspruch 20, wenn das Programm auf einer Fahrzeugsteuereinheit (130, 140) nach Anspruch 1 ausgeführt wird.

22. Computerlesbares Medium (1610), das ein Computerprogramm trägt, umfassend Programmcodeeinrichtungen zum Durchführen der Schritte nach Anspruch 20, wenn das Programmprodukt auf einer Fahrzeugsteuereinheit (130, 140) nach Anspruch 1 ausgeführt wird.

**Revendications**

1. Unité de commande de véhicule (130, 140) conçue pour commander le mouvement d'un véhicule utilitaire lourd (100) comprenant des dispositifs de première et seconde machine électrique, EM, (EM1, EM2), le premier dispositif EM ayant des caractéristiques d'efficacité différentes de celles du second dispositif EM,

dans laquelle l'unité de commande de véhicule (130, 140) est conçue pour commander le premier et le second dispositif EM (EM1, EM2) en transmettant des demandes de patinage des roues aux unités de commande EM respectives, dans laquelle l'unité de commande (130, 140) est conçue pour obtenir une force longitudinale totale souhaitée (Fx) devant être générée conjointement par le premier et le second dispositif EM, et pour obtenir les caractéristiques d'efficacité respectives du premier et du second dispositif EM (EM1, EM2),

dans laquelle l'unité de commande (130, 140) est conçue pour déterminer un premier patinage de roue souhaité ($\lambda$1) correspondant à une première force longitudinale (F1) générée par le premier dispositif EM, et un second patinage de roue souhaité ($\lambda$2) correspondant à une seconde force longitudinale (F2) générée par le second dispositif EM, la somme de la première force longitudinale (F1) et de la seconde force longitudinale (F2) étant adaptée à la force longitudinale totale souhaitée (Fx), **caractérisée en ce que** l'unité de commande (130, 140) est conçue pour équilibrer l'ampleur du premier patinage de roue ($\lambda$1) par rapport à l'ampleur du second patinage de roue ($\lambda$2) en fonction des caractéristiques d'efficacité respectives du premier et du second dispositifs EM (EM1, EM2).

2. Unité de commande de véhicule (130, 140) selon la revendication 1, où le premier dispositif EM (EM1) a une caractéristique d'efficacité différente en fonction de la vitesse du véhicule (Vx) par rapport au deuxième dispositif EM (EM2).

3. Unité de commande de véhicule (130, 140) selon la revendication 1 ou 2, où le premier dispositif EM (EM1) a une caractéristique d'efficacité différente en fonction du couple appliqué ou de la force de la roue par rapport au deuxième dispositif EM (EM2).

4. Unité de commande de véhicule (130, 140) selon l'une quelconque des revendications précédentes, où le premier arrangement EM (EM1) comprend un ou plusieurs EM d'une conception EM différente et/ou comprend un rapport de vitesse différent par rapport au deuxième dispositif EM (EM2).

5. Unité de commande de véhicule (130, 140) selon l'une quelconque des revendications précédentes, où le premier dispositif EM (EM1) est associé à un premier essieu du véhicule et le second dispositif EM (EM2) est associé à un second essieu du véhicule utilitaire lourd (100).

6. Unité de commande de véhicule (130, 140) selon l'une quelconque des revendications précédentes, où le premier dispositif EM (EM1) est un dispositif EM de démarrage configuré pour l'efficacité à des vitesses de véhicule inférieures, et où le second dispositif EM (EM2) est un dispositif EM de mode de croisière configuré pour l'efficacité à des vitesses de véhicule supérieures.

7. Unité de commande de véhicule (130, 140) selon la revendication 6, où le dispositif EM de démarrage est configuré pour alimenter un essieu arrière de l'unité de véhicule (720, 730), et où le dispositif EM de mode de croisière est configuré pour alimenter un essieu directeur de l'unité de véhicule (710).

8. Unité de commande de véhicule (130, 140) selon l'une quelconque des revendications précédentes, dans laquelle l'unité de commande (130, 140) est conçue pour équilibrer l'ampleur du premier patinage de roue ($\lambda$1) par rapport à l'ampleur du second patinage de roue ($\lambda$2) sur la base d'un gradient relatif des caractéristiques d'efficacité des arrangements EM respectifs (EM1, EM2) par rapport à un paramètre de commande.

9. Unité de commande de véhicule (130, 140) selon la revendication 8, dans laquelle l'unité de commande est agencée pour augmenter le premier patinage de roue ($\lambda$1) dans le cas où le gradient des caractéristiques d'efficacité du premier arrangement EM (EM1) est plus grand que le gradient des caractéristiques d'efficacité du second arrangement EM (EM2) à un état actuel du véhicule (100), et de diminuer le premier patinage de roue ($\lambda$1) dans le cas où le gradient des caractéristiques d'efficacité du premier dispositif EM (EM1) est inférieur au gradient des caractéristiques d'efficacité du second dispositif EM (EM2) à l'état actuel du véhicule (100).

10. Unité de commande de véhicule (130, 140) selon l'une quelconque des revendications précédentes, dans laquelle l'unité de commande (130, 140) est conçue pour équilibrer l'ampleur du premier patinage de roue ($\lambda$1) par rapport à l'ampleur du second patinage de roue ($\lambda$2) sur la base d'une consommation d'énergie relative (P1, P2) du premier et du second dispositif EM (EM1, EM2) par rapport à une relation d'ampleur entre la première force longitudinale (F1) et la seconde force longitudinale (F2).

11. Unité de commande de véhicule (130, 140) selon la revendication 10, dans laquelle l'unité de commande (130, 140) est agencée pour augmenter le premier patinage de roue ($\lambda$1) dans le cas où un rapport entre la consommation d'énergie du premier dispositif EM (EM1) et la consommation d'énergie du deuxième dispositif EM (EM2) est inférieur à un rapport correspondant entre la première force longitudinale (F1) et la deuxième force longitudinale (F2), et de diminuer le premier patinage de roue ($\lambda$1) dans le cas où le rapport entre la consommation d'énergie du premier dispositif EM (EM1) et la consommation d'énergie du second dispositif EM (EM2) est supérieur au rapport correspondant entre la première force longitudinale (F1) et la seconde force longitudinale (F2).

12. Unité de commande de véhicule (130, 140) selon l'une quelconque des revendications précédentes, dans laquelle l'unité de commande (130, 140) est agencée pour équilibrer l'ampleur du premier patinage de roue ($\lambda$1) par rapport à l'ampleur du second patinage de roue ($\lambda$2) sur la base d'une fonction d'équilibrage prédéterminée paramétrée par la vitesse du véhicule.

13. Unité de commande de véhicule (130, 140) selon l'une quelconque des revendications précédentes, dans laquelle l'unité de commande (130, 140) est conçue pour équilibrer l'ampleur du premier patinage de roue ($\lambda$1) par rapport à l'ampleur du second patinage de roue ($\lambda$2) sur la base d'une fonction d'équilibrage prédéterminée paramétrée par la force longitudinale totale (Fx).

14. Unité de commande de véhicule (130, 140) selon l'une quelconque des revendications précédentes, dans laquelle la demande de patinage de roue transmise comprend un patinage de roue longitudinal cible donné par

$$\lambda_x = \frac{R\omega_x - v_x}{max(|R\omega|, |v_x|)}$$

où R est le rayon effectif de la roue en mètres, $\omega_x$ est la vitesse angulaire de la roue et $v_x$ est la vitesse longitudinale de la roue sur le sol.

15. Unité de commande de véhicule (130, 140) selon l'une quelconque des revendications 1 à 13, dans laquelle la demande de patinage transmise comprend une vitesse angulaire cible de la roue ($\omega_x$), déterminée par l'unité de contrôle (130, 140) en fonction d'une vitesse longitudinale $v_x$ de la roue sur le sol afin d'obtenir un patinage longitudinal cible $\lambda_x$.

16. Unité de commande de véhicule (130, 140) selon l'une quelconque des revendications précédentes, dans laquelle l'unité de commande (130, 140) est conçue pour équilibrer l'ampleur du premier patinage de roue ($\lambda$1) par rapport à l'ampleur du second patinage de roue ($\lambda$2) sur la base d'une estimation de l'usure du pneu ou du taux d'usure du pneu résultant du premier patinage de roue ($\lambda$1) et du second patinage de roue ($\lambda$2).

17. Unité de commande de véhicule (130, 140) selon l'une quelconque des revendications précédentes, dans laquelle l'unité de commande (130, 140) est conçue pour équilibrer l'ampleur du premier patinage de roue ($\lambda$1) par rapport à l'ampleur du second patinage de roue ($\lambda$2) sur la base des charges normales respectives sur les essieux associés au premier dispositif EM (EM1) et au second dispositif EM (EM2).

18. Véhicule utilitaire lourd (100, 110, 120) comprenant une unité de commande de véhicule (130, 140) selon l'une quelconque des revendications précédentes.

19. Unité de véhicule tractée, telle qu'une remorque autopropulsée (120, 130) ou une unité de véhicule Dolly autopropulsée (140), comprenant une unité de commande de véhicule (140) selon l'une quelconque des revendications précédentes, où l'unité de véhicule tractée comprend un premier essieu et un second essieu, où le premier essieu est agencé pour être entraîné par le premier dispositif EM (EM1) et où le second essieu est agencé pour être entraîné par le second dispositif EM (EM1).

20. Procédé exécuté dans une unité de commande de véhicule (130, 140) conçu pour commander le mouvement d'un véhicule utilitaire lourd (100) comprenant un premier et un second dispositif de machine électrique (EM1, EM2), le premier dispositif EM ayant une caractéristique d'efficacité différente de celle du second dispositif EM,

dans lequel l'unité de commande de véhicule (130, 140) est conçue pour commander le premier et le second dispositif EM (EM1, EM2) en transmettant des demandes de patinage des roues aux unités de commande EM respectives, le procédé consistant à obtenir (S1) une force longitudinale totale souhaitée (Fx) devant être générée conjointement par le premier et le second dispositif EM, et obtenir les caractéristiques d'efficacité respectives du premier et du second dispositif EM (EM1, EM2), déterminer (S2) un premier patinage de roue souhaité ($\lambda$1) correspondant à une première force longitudinale (F1) générée par le premier dispositif EM, et un second patinage de roue souhaité ($\lambda$2) correspondant à une seconde force longitudinale (F2) générée par le second dispositif EM, où la somme de la première force longitudinale (F1) et de la seconde force longitudinale (F2) correspond à la force longitudinale totale souhaitée (Fx), et **caractérisé en ce que** le procédé comprend en outre
équilibrer (S3) l'ampleur du premier patinage de roue ($\lambda$1) par rapport à l'ampleur du second patinage de roue ($\lambda$2) en fonction des caractéristiques d'efficacité respectives du premier et du second dispositifs EM (EM1, EM2).

21. Programme informatique comprenant des moyens de code de programme (1620) pour exécuter les étapes de la revendication 20 lorsque ledit programme est exécuté sur une unité de commande de véhicule (130, 140) selon la revendication 1.

22. Support lisible par ordinateur (1610) contenant un programme informatique comprenant un moyen de code de programme pour exécuter les étapes de la revendication 20 lorsque ledit produit de programme est exécuté sur une unité de commande de véhicule (130, 140) selon la revendication 1.

FIG. 1

FIG. 2

300

TSM
380

$a_{req}, c_{req}$

VMM
370

375

$\lambda_{Bi}$    CAP B$_i$    CAP EM$_i$    $\lambda_{EMi}$

WEM B$_i$
360

WEM EM$_i$
350

340

310

$\omega_x$    R

320

EM$_i$
330

FIG. 3

400

$$Fx = \sum_i Fi$$

EM$_1$

EM$_2$    EM$_3$

F$_1$    F$_2$    F$_3$

EM$_1$

EM$_2$    EM$_3$

FIG. 4

500

$$Fx = \sum_i Fi$$

F$_1$    F$_2$

EM$_1$    DIFF    EM$_2$    DIFF

F$_1$    F$_2$

FIG. 5

electric machine efficiency

FIG. 6

FIG. 7

FIG. 8

FIG. 9A

FIG. 9B

FIG. 10

FIG. 11

$$Ei = f(Pi) \propto \frac{Fi}{\sum_k Fk}$$

FIG. 12A

FIG. 12B

1300

TSM
380

$a_{req}$   $c_{req}$

VMM
370

$V_1$   $V_2$

$Fy_1$   $Fx_1$   $Fy_2$   $Fx_2$

Mz   Mz

310   $\omega_x$

$F_y$

$F_x$   $F_z$

SENSORS 1310

VISION   WHEEL

RADAR   LIDAR   GPS

1350

| MOTION ESTIMATION | s | GLOB FORCE GENERATION | V | MSD COORDINATION | | SLIP BALANCE OPTIMIZATION |

1320   1330   1340

$\lambda_i / \omega_i / \delta_i$

s

capability report       capability report       capability report

$\lambda_i/\omega_i$       $\lambda_i/\omega_i$       $\lambda_i/\delta_i$

MSD
340

BRAKES       PROPULSION       STEERING etc.

FIG. 13

S1

S2

S3

FIG. 14

130, 140

1510 — 1520 ↔ →

1530

FIG. 15

1600

1610

1620

FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010222953 A
- US 2016009197 A
- GB 2477229 B
- US 20170282751 A1

**Non-patent literature cited in the description**

- **HANS PACEJKA**. Tyre and vehicle dynamics. Elsevier Ltd, 2012